# EUROPÄISCHE PATENTANMELDUNG

(11) **EP 4 357 104 A1**
(43) Veröffentlichungstag der Anmeldung: **24.04.2024**
(21) Anmeldenummer: 23204246.5
(22) Anmeldetag: 18.10.2023
(51) Int. Cl.: B29C 48/09, B29C 48/13, B29C 48/25, B29C 48/30, B29D 23/18

(54) **VORRICHTUNG ZUM HERSTELLEN VON KUNSTSTOFFROHREN**

(30) Priorität: 18.10.2022 DE 102022127261; 03.02.2023 DE 102023102683; 03.02.2023 DE 102023102686; 04.08.2023 DE 102023120768
(71) Anmelder: UNICOR GmbH, 97437 Hassfurt (DE)
(72) Erfinder: KOSSNER, Hubert, 97523 Schwanfeld (DE)
(74) Vertreter: Louis Pöhlau Lohrentz

(57) **Zusammenfassung**

Beschrieben wird eine Vorrichtung (10) zum Herstellen von Kunststoffrohren (10), mit einem Extruder (9) mit Spritzkopf (9s) und einem Korrugator (1), in den über den Spritzkopf (9s) ein Kunststoffschmelzeschlauch zum Ausformen des Kunststoffrohres (10) eingeleitet wird.

Für eine optimierte Führung der Formbacken (5) in der ortsfesten Führungseinrichtung (6) ist vorgesehen, dass der Formbacken zusätzlich zu dem ersten Führungsstift (5.1) und dem zweiten Führungsstift (5.2) einen zusätzlichen weiteren Führungsstift oder mehrere zusätzliche weitere Führungsstifte aufweist, wobei der zusätzliche weitere Führungsstift oder die zusätzlichen weiteren Führungsstifte jeweils in eine separate zugeordnete Führungsnut eingreift bzw. eingreifen, und zwar
a) unter Ausbildung einer nur phasenweisen Wirkschaltung oder Wirklosschaltung und/oder
b) unter Ausbildung eines nicht formschlüssigen und/oder nicht kraftschlüssigen Eingriffs in die zugeordnete Führungsnut im Sinne einer lediglich sekundären Mitführung, und/oder
c) unter Ausbildung eines formschlüssigen Eingriffs und/oder eines kraftschlüssigen Eingriffs im Sinne einer parallelen redundanten Führung.

## Beschreibung

Die Erfindung betrifft eine Vorrichtung zum Herstellen von Kunststoffrohren, vorzugsweise Kunststoffwellrohren nach dem Oberbegriff des Anspruchs 1.

Aus der WO 2017/064 368 A1 und der WO 2017/046 421 A1 sind derart aufgebaute Vorrichtungen bekannt.

Der Erfindung liegt die Aufgabe zugrunde eine hinsichtlich der Führung der Formbacken verbesserte Vorrichtung zu schaffen.

Erfindungsgemäß wir diese Aufgabe mit dem Gegenstand des Anspruchs 1 gelöst. Weitere Lösungsmerkmale ergeben sich aus den auf den Anspruch 1 rückbezogenen Unteransprüchen 2 bis 14.

Bei der erfindungsgemäßen Lösung handelt es sich um eine Vorrichtung, die die Merkmale des Oberbegriffs des Hauptanspruchs 1 aufweisen. Wesentlich für die erfindungsgemäße Lösung ist, dass der Formbacken zusätzlich zu dem ersten Führungsstift und dem zweiten Führungsstift einen zusätzlichen weiteren Führungsstift oder mehrere zusätzliche weitere Führungsstifte aufweist, wobei der zusätzliche weitere Führungsstift oder die zusätzlichen weiteren Führungsstifte jeweils in eine separate zugeordnete Führungsnut der Führungseinrichtung eingreift bzw. eingreifen und/oder mit einer zugeordneten Führungsfläche oder Führungskante zusammenwirkt bzw. zusammenwirken, und zwar
a) unter Ausbildung einer phasenweisen, vorzugsweise wechselweisen Wirkstellung oder Wirklosstellung einzelner Bereiche der Führungseinrichtung und/oder
b) unter Ausbildung eines nicht formschlüssigen und/oder nicht kraftschlüssigen Eingriffs in die zugeordnete Führungsnut im Sinne einer lediglich sekundären Mitführung, und/oder
c) unter Ausbildung eines formschlüssigen und/oder kraftschlüssigen Eingriffs in die zugeordnete Führungsnut im Sinne einer parallelen redundanten Führung oder im Sinne einer Führung, die Kräfte des zusätzlichen weiteren Führungsstiftes oder der weiteren zusätzlichen Führungsstifte abstützt, die anders gerichtet sind als die in der Führungsnut des ersten Führungsstiftes und/oder zweiten Führungsstiftes abgestützten Kräfte.

Bevorzugte Ausführungen der Alternative a) des Hauptanspruchs sehen vor, dass zur Ausbildung einer Wirkstellung oder Wirklosstellung gemäß Alternative a) der zusätzliche weitere Führungsstift oder die zusätzlichen weiteren Führungsstifte in die zugeordnete zusätzliche Führungsnut eingreift bzw. eingreifen, indem dieser Führungsstift bzw. diese Führungsstifte in einem Abschnitt der zugeordneten Führungsnut formschlüssig und/oder kraftschlüssig eingreift bzw. eingreifen unter Ausbildung der Wirkstellung und in einem anderen Abschnitt der Führungsnut nicht formschlüssig und/oder nicht kraftschlüssig eingreift bzw. eingreifen unter Ausbildung der Wirklosstellung.

Besonders bevorzugte Ausführungen der Alternative a) des Hauptanspruchs 1 können vorsehen, dass in einem ersten Abschnitt der Führungseinrichtung vorzugsweise in dem Umlenkbereich mit anschließendem Einlaufabschnitt der erste Führungsstift und der zweite Führungsstift in Wirkstellung sind, und dabei der dritte Führungsstift und der vierte Führungsstift in Wirklosstellung sind, und dass in einem zweiten Abschnitt der Führungseinrichtung, vorzugsweise in dem Auslaufabschnitt mit anschließendem Umlenkbereich der dritte Führungsstift und der vierte Führungsstift in Wirkstellung sind, und dabei der erste Führungsstift und der zweite Führungsstift in Wirklosstellung sind.

Bevorzugte Ausführungen können hinsichtlich der Führungsnuten vorsehen, dass zur Ausbildung einer Wirklosstellung gemäß Alternative a) und/oder zur Ausbildung eines nicht formschlüssigen und/oder nicht kraftschlüssigen Eingriffs gemäß Alternative b) die Führungsnut, in die der zusätzliche Führungsstift eingreift, als erweiterte Führungsnut ausgebildet ist, deren lichte Weite größer ist als der Durchmesser des Führungsstiftes.

Bevorzugte Ausführungen können eine federnde Gestaltung der Führungsnuten vorsehen, indem vorgesehen ist, dass zur Ausbildung einer Wirklosstellung gemäß Alternative a) und/oder zur Ausbildung eines nicht formschlüssigen und/oder nicht kraftschlüssigen Eingriffs gemäß Alternative b) die Führungsnut, in die der zusätzliche Führungsstift eingreift, eine federnd gelagerte und/oder federnd ausgebildete Seitenwand aufweist und/oder einen federnd gelagerten und/oder federnd ausgebildeten Nutgrund aufweist.

Es kann hinsichtlich der Führungsnut auch vorgesehen sein, dass zur Ausbildung einer Wirklosstellung gemäß Alternative a) und/oder zur Ausbildung eines nicht formschlüssigen und/oder nicht kraftschlüssigen Eingriffs gemäß Alternative b) die Führungsnut, in die der zusätzliche Führungsstift eingreift, als eine in der Höhe sich erweiternde Führungsnut ausgebildet ist.

Vorteilhafter Weise kann der Führungsstift federnd ausgebildet sein, indem vorgesehen ist, dass zur Ausbildung einer Wirklosstellung gemäß Alternative a) und/oder zur Ausbildung eines nicht formschlüssigen und/oder nicht kraftschlüssigen Eingriffs gemäß Alternative b) der zusätzliche weitere Führungsstift seitlich federnd gelagert oder seitlich federnd ausgebildet ist.

Zusätzlich oder alternativ kann in diesem Sinne auch vorgesehen sein, dass zur Ausbildung einer Wirklosstellung gemäß Alternative a) und/oder zur Ausbildung eines nicht formschlüssigen und/oder nicht kraftschlüssigen Eingriffs gemäß Alternative b) der zusätzliche weitere Führungsstift axial federnd gelagert oder axial federnd ausgebildet ist.

Besonders bevorzugte Ausführungen, vorzugsweise nach Alternative c) des Hauptanspruchs 1 im Sinne einer Führung, die Kräfte des zusätzlichen weiteren Führungsstiftes oder der zusätzlichen weiteren Führungsstifte abstützt, die anders gerichtet sind als die in der Führungsnut des ersten Führungsstiftes und/oder des zweiten Führungsstiftes abgestützten Kräfte, sehen vor, dass der erste Führungsstift und der zweite Führungsstift an der Oberseite und/oder an der Unterseite des Formbackens, vorzugsweise vertikal ausgerichtet, ausgebildet ist bzw. sind, und dass der zusätzliche weitere Führungsstift oder die weiteren Führungsstifte an der Oberseite und/oder an der Unterseite des Formbackens, vorzugsweise vertikal ausgerichtet, ausgebildet ist bzw. sind.

In bevorzugter Weiterbildung kann vorgesehen sein, dass der erste Führungsstift und der zweite Führungsstift unter Abstützung von Seitenkräften, vorzugsweise horizontal gerichtete Seitenkräfte des Führungsstiftes, jeweils in die zugeordnete Führungsnut der Führungseinrichtung eingreift und dass der zusätzliche weitere Führungsstift oder die zusätzlichen weiteren Führungsstifte unter Abstützung von Axialkräften des Führungsstiftes, vorzugsweise vertikal gerichtete Axialkräfte, in die zugeordnete Führungsnut eingreift bzw. eingreifen und/oder mit der zugeordneten Führungsfläche und/oder Führungskante der Führungseinrichtung zusammenwirkt bzw. zusammenwirken.

Besonders bevorzugte Ausführungen, vorzugsweise nach Alternative c) des Hauptanspruchs 1 im Sinne einer Führung die Kräfte des zusätzlichen weiteren Führungsstiftes oder der zusätzlichen weiteren Führungsstifte abstützt, die anders gerichtet sind als die in der Führungsnut des ersten Führungsstiftes und/oder des zweiten Führungsstiftes abgestützten Kräfte, sehen vor, dass der ersten Führungsstift und der zweite Führungsstift an der Oberseite und/oder an der Unterseite des Formbackens, vorzugsweise vertikal ausgerichtet, ausgebildet sind und dass der zusätzliche weitere Führungsstift oder die zusätzlichen weiteren Führungsstifte an einer Seitenfläche des Formbackens die von der Formfläche des Formbackens abgewandt ist, ausgebildet ist bzw. sind, vorzugsweise horizontal ausgerichtet.

In bevorzugter Weiterbildung kann vorgesehen sein, dass der erste Führungsstift und der zweite Führungsstift unter Abstützung von Seitenkräften des Führungsstiftes, vorzugsweise horizontal gerichteten Seitenkräften, in die zugeordnete Führungsnut eingreifen und dass der zusätzliche weitere Führungsstift oder die zusätzlichen weiteren Führungsstifte zur Abstützung von Seitenkräften des Führungsstiftes, vorzugsweise vertikal gerichteten Seitenkräften, in die zugeordnete Führungsnut eingreift bzw. eingreifen und/oder mit der zugeordneten Führungsfläche oder Führungskante der Führungseinrichtung zusammenwirkt bzw. zusammenwirken.

Bevorzugte Ausführungen sehen hinsichtlich der Führungsstifte vor, dass die Führungsstifte jeweils so ausgebildet sind, dass das in die Führungsnut eingreifende freie Ende des Führungsstiftes als ein bewegungsfestes Teil des Führungsstiftes ausgebildet ist.

Bevorzugte Ausführungen können hinsichtlich der Führungsstifte zusätzlich oder alternativ auch vorsehen, dass die Führungsstifte jeweils so ausgebildet sind, dass der Führungsstift in den Formbacken eingepresst oder eingeschweißt oder verschraubt ist.

Was die ortsfeste Führungseinrichtung betrifft, kann vorteilhafter Weise vorgehe sein, dass die Führungsnuten zum Eingriff der zugeordneten Führungsstifte zumindest einen Teil der ortsfesten Führungseinrichtung zur Führung der Formbacken bilden, und zwar vorzugsweise eine Führungseinrichtung für einen Umlenkbereich in den Einlaufabschnitt und/oder eine Führungseinrichtung für einen Umlenkbereich in den Auslaufabschnitt und/oder eine Führungseinrichtung in dem Zwischenabschnitt des Korrugators im Bereich der Formstrecke zur Führung der Formbackenpaare und/oder im Bereich der Rückführung zur Führung der Formbacken und/oder im Bereich der Rückführung zur Führung der Formbacken vom Ende der Formstrecke zum Anfang der Formstrecke.

Besonders bevorzugte Ausführungen sehen vor, dass die ortsfeste Führungseinrichtung zur Führung der Formbacken eine Führungs- und/oder Temperierkörpereinrichtung aufweist, die vorzugsweise in dem Zwischenabschnitt des Korrugators im Bereich der Formstrecke zur Führung der Formbackenpaare und/oder im Bereich der Rückführung zur Führung der Formbacken vom Ende der Formstrecke zum Anfang der Formstrecke ausgebildet ist.

In bevorzugten Weiterbildungen kann vorgesehen sein, dass die Führungsund/oder Temperierkörpereinrichtung aus mehreren in Führungsrichtung axial hintereinander auf Stoß angeordneten Temperierkörpern ausgebildet ist und/oder aus mehreren quer zur Führungsrichtung nebeneinander angeordneten Temperierkörpern ausgebildet ist, wobei vorzugsweise vorgesehen ist, dass in dem Temperierkörper und/oder in den Temperierkörpern ein oder mehrere Temperiermittelkanal bzw. Temperiermittelkanäle ausgebildet sind, der bzw. die von einem Temperiermittel durchströmt ist bzw. sind.

In diesem Zusammenhang kann vorteilhaft auch vorgesehen sein, dass in einer Führungs- und Temperierflächeneinrichtung Erhebungen und/oder Vertiefungen aufweisende Führungsausnehmungen und/oder ebene Führungsflächen ausgebildet sind, die mit korrespondierenden Führungsausnehmungen und/oder Führungsflächen der passierenden Formbacken zusammenwirken.

Besonders bevorzugte Ausführungen sehen vor, dass die linken Formbacken in einem linken Formbackenumlauf endlos geführt sind und die rechten Formbacken in einem rechten Formbackenumlauf endlos geführt sind, wobei der linke Formbackenumlauf und der rechte Formbackenumlauf jeweils einen Umlenkbereich mit Umlenkritzeleinrichtung ausgebildeten Einlaufabschnitt, einen lineare Formstreckenabschnitt und einen als Umlenkbereich mit Umlenkritzeleinrichtung ausgebildeten Auslaufabschnitt und einen den Auslaufabschnitt und den Einlaufabschnitt verbindenden Rücklaufabschnitt aufweist.

Was die ortsfeste Führungseinrichtung betrifft, kann besonders vorteilhaft vorgesehen sein, dass die ortsfeste Führungseinrichtung der Formbacken durch je eine ortsfeste Führungseinrichtung in den Umlenkbereichen und durch eine ortsfeste Führungseinrichtung in dem Zwischenabschnitt gebildet ist, wobei vorzugsweise vorgesehen ist, dass die ortsfeste Führungseinrichtung in jedem Umlenkbereichen eine Gestelleinrichtung und/oder eine Bodenplatteneinrichtung und/oder eine Deckenplatteneinrichtung aufweist, an oder in der die Führungsnuten angeordnet sind und die eine Führungsflächeneinrichtung zur gleitenden Führung der Unterseite der passierenden Formbacken aufweist; und dass die ortsfeste Führungseinrichtung in dem Zwischenabschnitt eine Führungsund oder Temperierkörpereinrichtung aufweist, die die passierenden Formbacken zumindest teilweise umgibt und Führungs- und/oder Temperierflächen zur gleitenden Führung mit den Außenflächen der Formbacken aufweist.

In diesem Zusammenhang kann vorgesehen sein, dass die Führungs- und/oder Temperierkörpereinrichtung mehrere Führungsnuten aufweist, die die Führungsnuten zum Eingriff der Führungsstifte der Formbacken bilden, wobei vorzugsweise vorgesehen ist, dass mindestens eine der Führungsnuten durch einen Zwischenraum zwischen aneinander liegenden Führungs- und/oder Temperierkörpern gebildet wird.

Was die Ausführungen von Formbacken betrifft, die an ihrer Seitenfläche, die der Formfläche des Formbackens abgewandt ist, eine Zahnreiheneinrichtung aufweisen, kann vorgesehen sein, dass die Zahnreiheneinrichtung mit einer Umlenkritzeleinrichtung in den Umlenkbereichen zusammenwirkt. Es kann aber auch vorgesehen sein, dass die Zahneinrichtung zusätzlich oder alternativ mit einer Ritzeleinrichtung im Zwischenabschnitt, vorzugsweise in der Formstrecke zusammenwirkt. Bevorzugte Ausführungen sehen vor, dass an einer Seitenfläche jedes Formbackens eine Zahnreiheneinrichtung ausgebildet ist, die mit der Umlenkritzeleinrichtung in den Umlenkbereichen zusammenwirkt.

Die Zahnreiheneinrichtung weist eine oder mehrere innenliegende oder aufliegende Zahnreihen auf, die sich an einer Seitenfläche des Formbacken abgewandt zur Formfläche des Formbacken in Längsrichtung des Formbackens, d.h. in Produktionsrichtung erstreckt bzw. erstrecken.

Die Zahnreiheneinrichtung in Verbindung mit der zusammenwirkenden Ritzeleinrichtung, d.h. der Umlenkritzeleinrichtung in den Umlenkbereichen des Korrugators oder einer anderen Ritzeleinrichtung, z.B. in der Formstrecke im Zwischenabschnitt des Korrugators hat bei bevorzugten Ausführungen primär Antriebsfunktion oder Spielausgleichsfunktion in Antriebsrichtung. Sie hat vorzugsweise keine Führungsfunktion in vertikaler Richtung, d.h. sie wirkt nicht zur Aufnahme von vertikalen Kräften.

Bei Ausführungen, bei denen die Zahnreiheneinrichtung als innenliegende Zahnreiheneinrichtung ausgebildet ist und primär Antriebsfunktion oder Spielausgleichsfunktion in Antriebsrichtung hat, greift das Ritzel daher mit oberem und unterem vertikalem Spiel in die Zahnreiheneinrichtung ein.

Die Führung der Formbacken in den Umlenkbereichen erfolgt durch die an den Formbacken ausgebildeten Führungsstiften, die in ortsfeste Führungsnuten im Umlenkbereich eingreifen. Die Führungsstifte wirken dabei nur seitlich, d.h. sie nehmen nur seitliche Kräfte auf. Die Führung der Formbacken in vertikaler Richtung erfolgt über Abstützung der Formbackenunterseite auf einer ortsfesten Führungsfläche, vorzugsweise einer Bodenfläche eines ortsfesten Lagerund/oder Führungsgestells. Eine axiale vertikale Abstützung in den Führungsnuten durch die Führungsstifte erfolgt bei bevorzugten Ausführungen nicht. Die Führungsstifte greifen in die Führungsnuten jeweils mit axialem vertikalem Spiel ein.

Im Zwischenabschnitt des Korrugators ist bei bevorzugten Ausführungen die ortsfeste Führungseinrichtung der Formbacken als Führungs- und/oder Temperierkörpereinrichtung ausgebildet. Die Führung der Formbacken erfolgt dabei zumindest an der Formbackenunterseite und gegebenenfalls an mindestens einer Seitenfläche der Formbacken auf Führungs- und/oder Temperierflächen der Führungs- und/oder Temperierkörpereinrichtungs.

Die Führungsstifte an der Unterseite und der Oberseite der Formbacken greifen bei bevorzugten Ausführungen in entsprechende Aufnahmenuten in den Führungs- und/oder Temperierflächen ein. Die Aufnahmenuten können als Führungsnuten zur Abstützung seitlicher Kräfte ausgebildet sein. Sie können aber auch als Aufnahmenuten mit seitlichem Spiel ausgebildet sein.

Ausführungen, bei denen die Zahnreiheneinrichtung als innenliegende Zahnreiheneinrichtung ausgebildet ist, erfordern in der seitlichen Führungsund/oder Temperierfläche der Führungs- und/oder Temperierkörper keine Aufnahmenut für die Zahnreiheneinrichtung, da die innenliegende Zahnreiheneinrichtung versenkt in der Seitenfläche der Formbacken angeordnet ist.

Ausführungen mit aufliegender Zahnreiheneinrichtung erfordern in der seitlichen Führungs- und/oder Temperierungsfläche der Führungs- und/oder Temperierkörpereinrichtung eine Aufnahmenut, die bei bevorzugten Ausführungen mit oberem und unterem vertikalem Spiel ausgebildet ist, so dass die Aufnahmenut keine Führungsfunktion, d.h. keine Abstützung von vertikalen Kräften erbringen muss.

Ausführungen von Formbacken, bei denen die Führungsstifte an der Oberseite des Formbackens angeordnet sind und keine oder nur wenige Führungsstifte an der Unterseite angeordnet sind, sind vorteilhaft für die Führung des Formbackens auf der Formbackenunterseite, da bei diesen Ausführungen die Formbackenunterseite als durchgehende Führungsfläche ausgebildet ist. Entsprechend erfordern diese Formbackenausführungen in der Führungsund/oder Temperierfläche der Führungs- und/oder Temperierkörpereinrichtung auch keine Aufnahmenut oder eine nur geringe Anzahl an Aufnahmenuten.

Bei speziellen Formbackenausführungen, bei denen die Führungsstifte zumindest an der Unterseite axial federnd ausgebildet sind, ist eine automatische Aus- und Einfahrbarkeit der Führungsstifte möglich, so dass die unteren Führungsund/oder Temperierflächen der Führungs- und/oder Temperierkörpereinrichtung als durchgehende Flächen ohne Aufnahmenut für die Führungsstifte der Formbacken ausgebildet sein können.

Die Oberseite der Formbacken läuft bei bevorzugten Ausführungen jeweils mit vertikalem Spiel zu der zugewandten oberen Führungs- und/oder Temperierfläche der Führungs- und/oder Temperierkörpereinrichtung. Diese oberen Führungsund/oder Temperierflächen haben dann also keine Führungsfunktion, sondern sie fungieren lediglich als Temperierflächen.

Was die Ausgestaltung der Zahnreiheneinrichtung betrifft, kann vorgesehen sein, dass die Zahnreiheneinrichtung als innenliegende Zahnreiheneinrichtung ausgebildet ist, die durch eine innenliegende Zahnreihe oder mehrere innenliegende Zahnreihen gebildet ist, wobei die Zähne und/oder die Zahnlücken der Zahnreihe jeweils senkrecht zur Seitenfläche gerichtet sind und in die Seitenfläche eingreifend und nicht über die Seitenfläche überstehend ausgebildet sind, oder dass die Zahnreiheneinrichtung als aufliegende Zahnreiheneinrichtung ausgebildet ist, die durch eine aufliegende Zahnreihe oder mehrere aufliegende Zahnreihen gebildet ist, wobei die Zähne und/oder Zahnlücken der Zahnreihe jeweils senkrecht zur Seitenfläche gerichtet sind und auf der Seitenfläche aufliegend und über die Seitenfläche überstehend ausgebildet sind.

Was Ausgestaltungen der Zahnreiheneinrichtung betrifft, sehen bevorzugte Ausführungen vor, dass die als innenliegende Zahnreiheneinrichtung ausgebildete Zahnreiheneinrichtung durch eine bezüglich der Höhenerstreckung der Seitenfläche mittig oder nahezu mittig angeordnete innenliegende Zahnreihe gebildet ist, oder dass die als aufliegende Zahnreiheneinrichtung ausgebildete Zahnreiheneinrichtung durch eine bezüglich der Höhenerstreckung der Seitenfläche mittig oder nahezu mittig angeordnete aufliegende Zahnreihe gebildet ist.

Die mittige Ausbildung der Zahnreihe weist hinsichtlich der symmetrischen Krafteinleitung durch das mit der Zahnreihe kämmende Ritzel besondere Vorteile auf.

Ähnliche Vorteile ergeben sich mit Ausführungen, die vorsehen, dass die als innenliegende Zahnreiheneinrichtung ausgebildete Zahnreiheneinrichtung durch eine im Bereich der oberen Hälfte der Seitenfläche, vorzugsweise unmittelbar in der oberen Kante des Formbacken, ausgebildete obere innenliegende Zahnreihe und durch eine im Bereich der unteren Hälfte der Seitenfläche, vorzugsweise unmittelbar in der unteren Kante des Formbacken, ausgebildete untere innenliegende Zahnreihe gebildet ist, oder dass die als aufliegende Zahnreiheneinrichtung ausgebildete Zahnreiheneinrichtung durch eine im Bereich der oberen Hälfte der Seitenfläche, vorzugsweise unmittelbar in der oberen Kante des Formbackens, obere aufliegende Zahnreihe und durch eine im Bereich der unteren Hälfte der Seitenfläche, vorzugsweise unmittelbar in der unteren Kante des Formbackens, ausgebildete untere aufliegende Zahnreihe ausgebildet ist, wobei vorgesehen ist, dass die aufliegende Zahnreihe senkrecht von der Seitenfläche auskragt und die Oberseite der aufliegenden Zahnreihe mit der Oberseite des Formbackens und unter die Unterseite der aufliegenden Zahnreihe mit der Unterseite des Formbackens fluchtet.

Vorteilhaft sind auch Ausführungen, die vorsehen, die obere innenliegende Zahnreihe mit Abstand unterhalb des oberen Randes der Seitenfläche und/oder der oberen Kante des Formbackens angeordnet ist, wobei der Abstand vorzugsweise einem Viertel der Höhenerstreckung der Seitenfläche entspricht, und/oder dass die untere innenliegende Zahnreihe mit Abstand oberhalb des unteren Randes der Seitenfläche und/oder der unteren Kante des Formbackens angeordnet ist, wobei der Abstand vorzugsweise einem Viertel der Höhenerstreckung der Seitenfläche entspricht.

In Verbindung mit dem oberen oder unteren Abstand im Bereich des oberen bzw. unteren Randes der Seitenfläche ergeben sich Vorteile bei der Führung und Temperierung der Formbacken an seitlichen Führungs- und oder Temperierflächen, indem vorgesehen ist, dass zwischen dem oberen Rand der Seitenfläche bzw. der oberen Kante des Formbackens und dem oberen Rand der innenliegenden oder aufliegenden Zahnreihe eine ebene Fläche ausgebildet ist, die mit der Ebene der Seitenfläche des Formbackens fluchtet, und/oder dass zwischen dem unteren Rand der innenliegenden oder aufliegenden Zahnreihe und dem unteren Rand der Seitenfläche bzw. der unteren Kante des Formbackens eine ebene Fläche ausgebildet ist, die mit der Ebene der Seitenfläche des Formbackens fluchtet.

Zu einer vorteilhaften Wärmeverteilung in Formbacken mit innenliegender Zahnreiheneinrichtung trägt bei, wenn vorgesehen ist, dass die innenliegende Zahnreihe der als innenliegende Zahnreiheneinrichtung ausgebildeten Zahnreiheneinrichtung eine in die Seitenfläche des Formbackens eingreifende Eingriffstiefe aufweist und der Formbacken zwischen der Außenseite der Seitenfläche des Formbackens und der Formfläche des Formbackens im Bereich der geringsten Wandstärke des Formbackens eine Mindestwanddicke aufweist, wobei gilt: d - t ≥ t.

Bei bevorzugten Ausführungen mit an den Formbacken ausgebildeter innenliegender Zahnreiheneinrichtung und/oder aufliegender Zahnreiheneinrichtung kann vorgesehen sein, dass die Zahnreiheneinrichtung, an der Seitenfläche des Formbacken bezüglich der Höhe der Seitenfläche unsymmetrisch verteilt ausgebildet ist, und dass die Anzahl der Führungsstifte an der Oberseite des Formbacken unterschiedlich oder gleich ist zu der Anzahl der Führungsstifte an der Unterseite des Formbacken, wobei jeder Formbacken genau zwei Führungsstifte oder genau drei Führungsstifte oder mehr als drei Führungsstifte aufweist.

Bei bevorzugten Ausführungen mit an den Formbacken ausgebildeter innenliegender Zahnreiheneinrichtung und/oder aufliegender Zahnreiheneinrichtung kann zusätzlich oder alternativ auch vorgesehen sein, dass die Breite der Zahnreihe der Zahnreiheneinrichtung sich quer zur Produktionsrichtung mindestens über ein Drittel der Höhe des Formbackens, vorzugsweise über die Hälfte der Höhe des Formbacken, insbesondere über die gesamte Höhe des Formbacken erstreckt, und dass die Anzahl der Führungsstifte an der Oberseite des Formbacken unterschiedlich oder gleich ist zu der Anzahl der Führungsstifte an der Unterseite des Formbacken, wobei jeder Formbacken genau zwei Führungsstifte oder genau drei Führungsstifte oder mehr als drei Führungsstifte aufweist.

Bei bevorzugten Ausführungen mit an den Formbacken ausgebildeter innenliegender Zahnreiheneinrichtung und/oder aufliegender Zahnreiheneinrichtung kann zusätzlich oder alternativ auch vorgesehen sein, dass die Anzahl der Führungsstifte an der Oberseite des Formbacken unterschiedlich ist zu der Anzahl der Führungsstifte an der Unterseite des Formbacken, wobei jeder Formbacken genau zwei Führungsstifte oder genau drei Führungsstifte oder mehr als drei Führungsstifte aufweist.

Die Erfindung wird im Folgenden anhand von Ausführungsbeispielen in Verbindung mit Figuren beschrieben. Die Figuren zeigen:
- Fig. 1: erfindungsgemäße Vorrichtung, Draufsicht;
- Fig. 1a: die Vorrichtung in Fig. 1, Schittdarstellung entlang Line A-A in Fig. 1, die Führungs- und/oder Temperierkörpereinrichtung zeigend;
- Fig. 2a: Formbacken mit Führungsstiften, perspektivische CAD-Darstellung;
- Fig. 2b: Formbacken mit Führungsstiften, diverse Zeichnungsansichten;
- Fig. 3a: Einlaufgeometrie der ortsfesten Führungseinrichtung, perspektivische CAD-Darstellung;
- Der obere Führungsstift 5.1 greift form- und/oder kraftschlüssig in die obere innere Führungsnut 50.1 ein.
- Der untere Führungsstift 5.2 greift form- und/oder kraftschlüssig in die untere innere Führungsnut 50.2 ein.
- Der obere Führungsstift 5.3 greift in die obere äußere erweiterte Führungsnut 50.3 ein.
- Der untere Führungsstift 5.4 greift in die untere äußere erweiterte Führungsnut 50.4 ein.

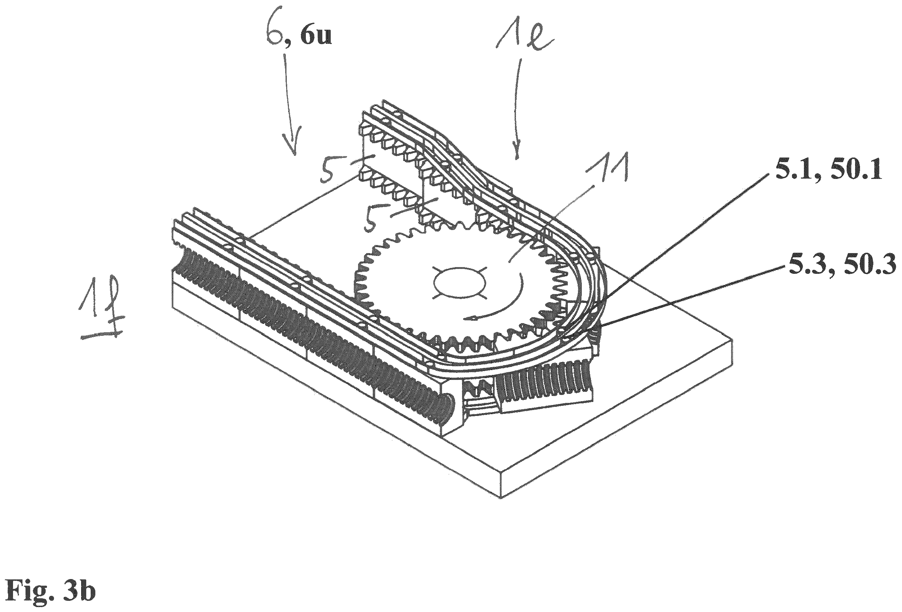

- Fig. 3b: Einlaufgeometrie der ortsfesten Führungseinrichtung, perspektivische Zeichnung;

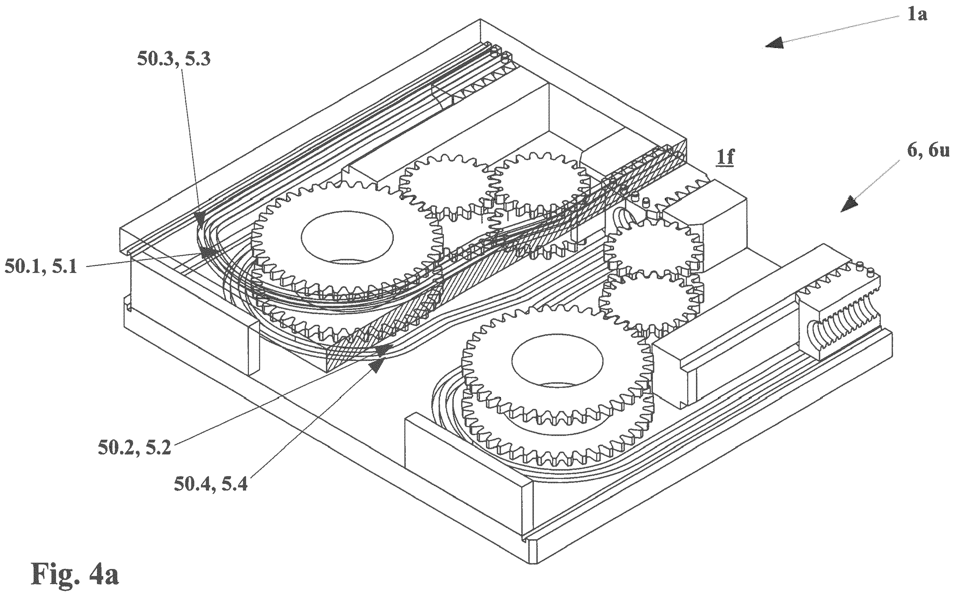

- Fig. 4a: Auslaufgeometrie der ortsfesten Führungseinrichtung, perspektivische CAD-Darstellung;
- Der obere Führungsstift 5.3 greift form- und/oder kraftschlüssig in die obere äußere Führungsnut 50.3 ein.
- Der untere Führungsstift 5.4 greift form- und/oder kraftschlüssig in die untere äußere Führungsnut 50.4 ein.
- Der obere Führungsstift 5.1 greift in die obere innere erweiterte Führungsnut 50.1 ein.
- Der untere Führungsstift 5.2 greift in die untere innere erweiterte Führungsnut 50.2 ein.

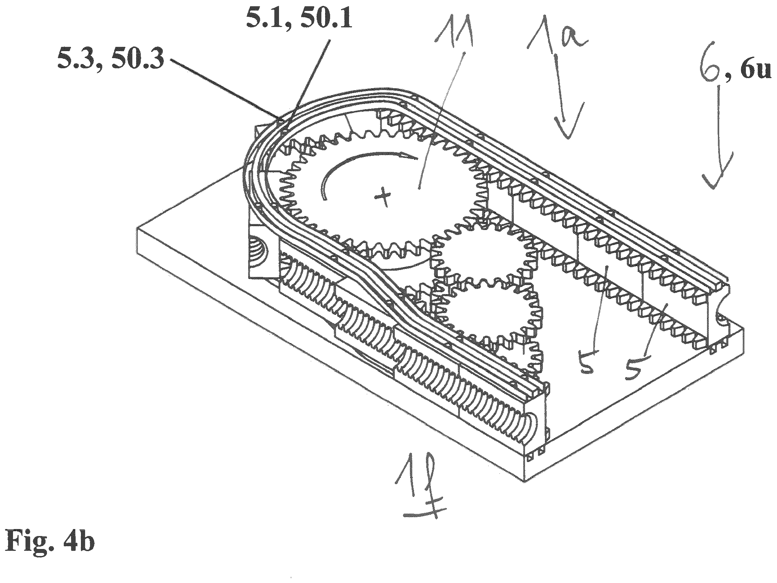

- Fig. 4b: Auslaufgeometrie der ortsfesten Führungseinrichtung, perspektivische Zeichnung;

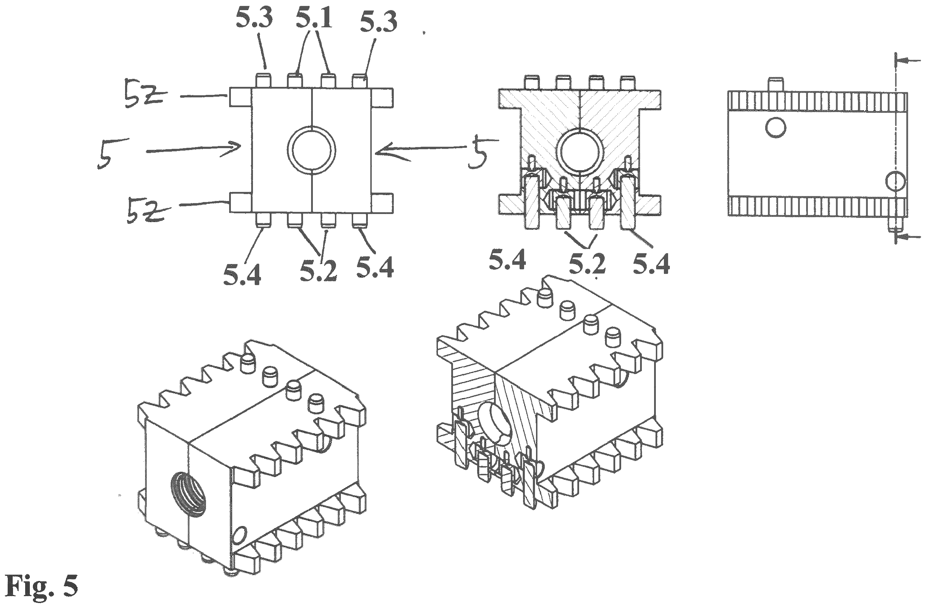

- Fig. 5: Formbacken mit seitlich gefederten Führungsstiften, diverse Zeichnungsansichten;

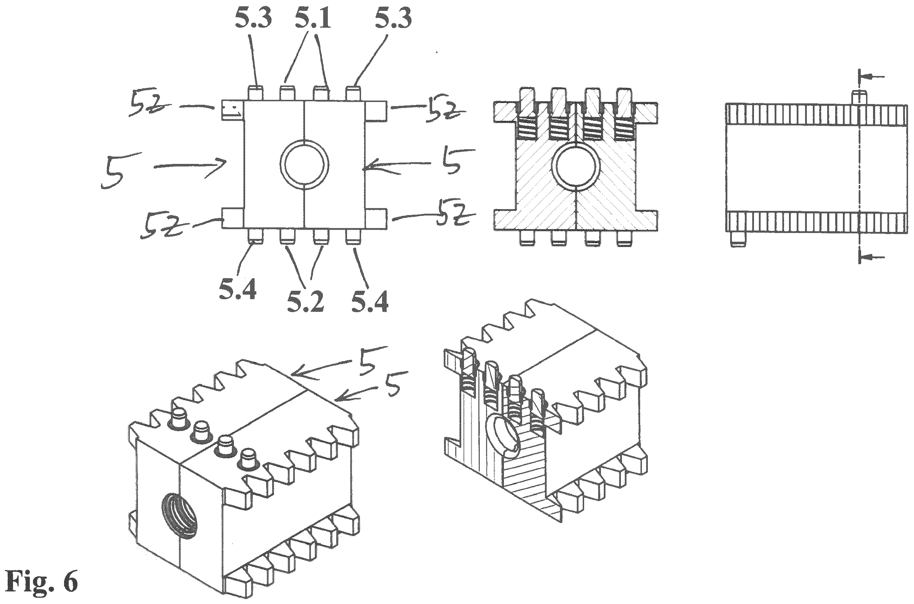

- Fig. 6: Formbacken mit axial gefederten Führungsstiften, diverse Zeichnungsansichten;

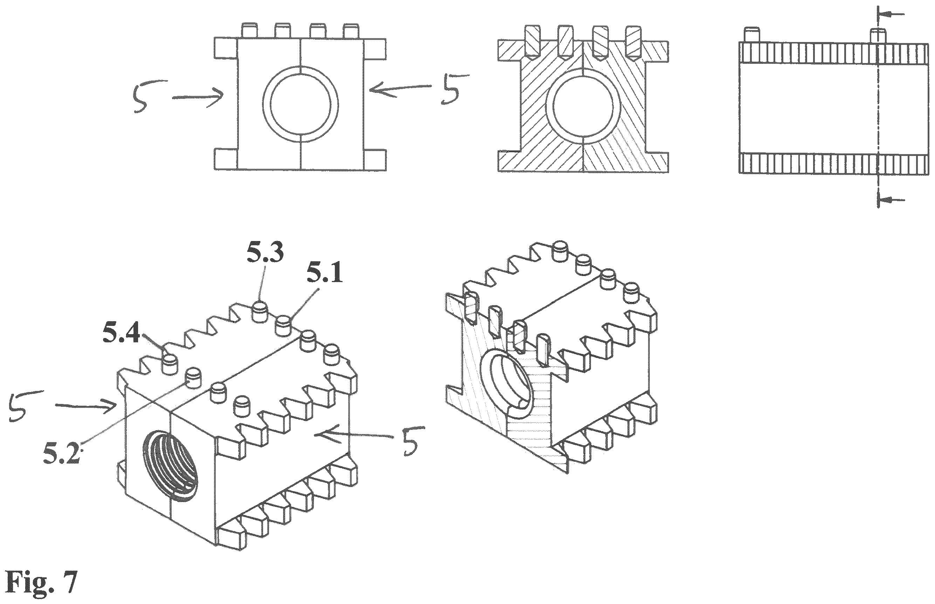

- Fig. 7: Formbacken mit Führungsstiften nur an Oberseite des Formbackens, diverse Zeichnungsansichten;

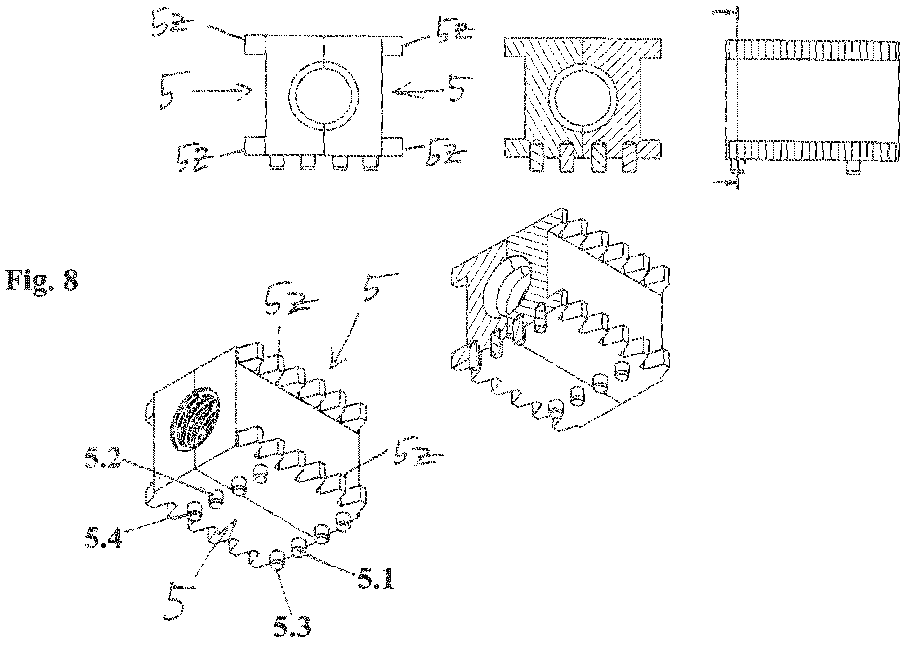

- Fig. 8: Formbacken mit Führungsstiften nur an Unterseite des Formbackens, diverse Zeichnungsansichten;

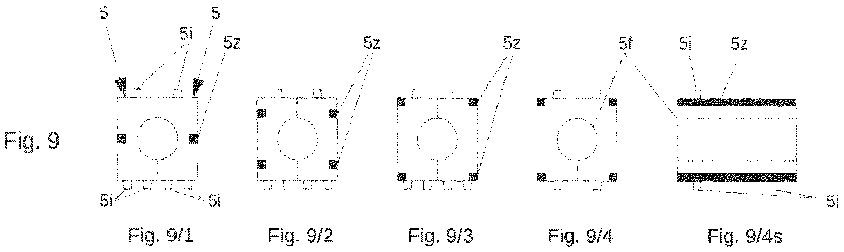

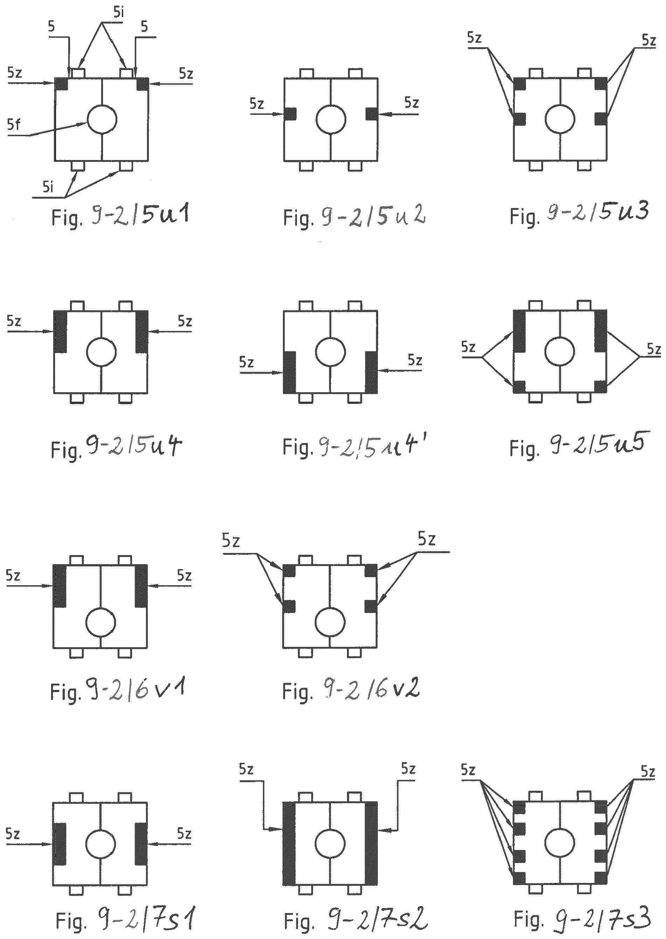

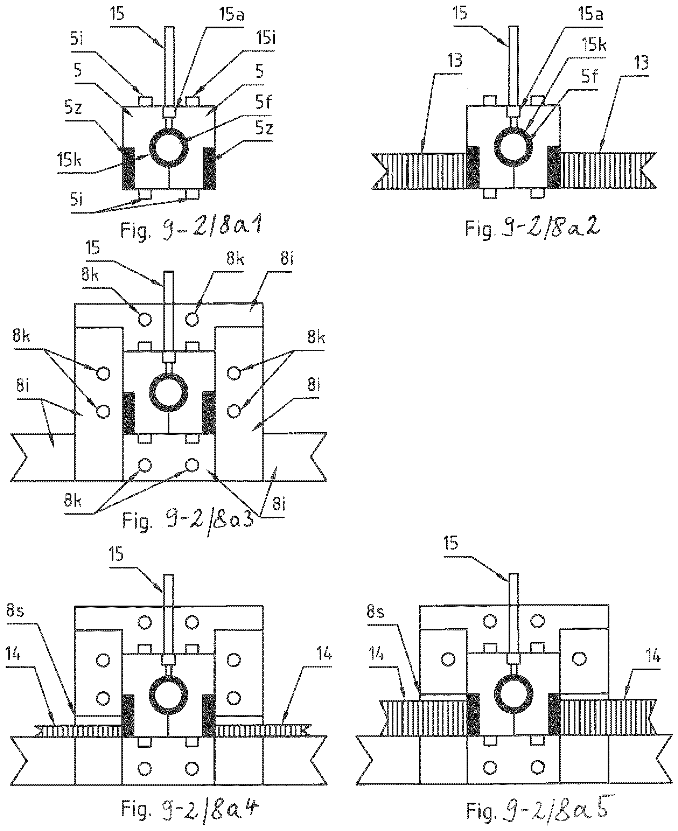

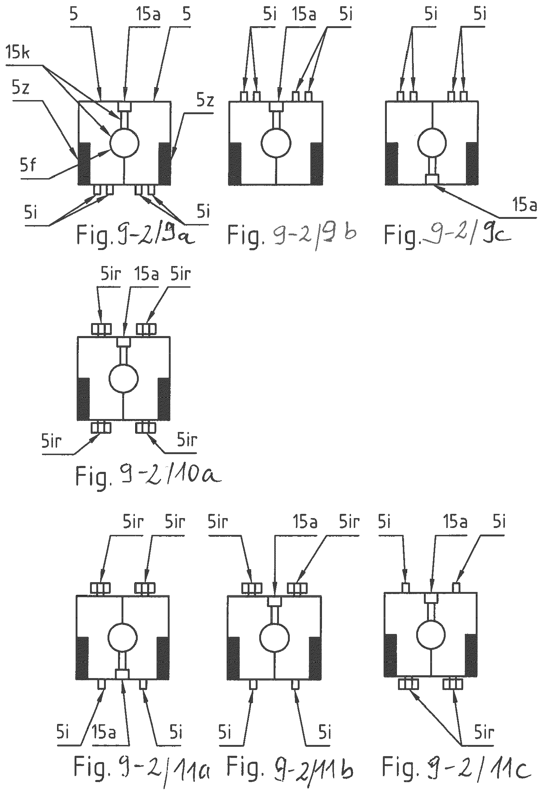

- Fig. 9: Formbacken mit einem Führungsstift an der Oberseite und zwei Führungsstiften an der Unterseite des Formbackens und einer an der Seitenfläche innenliegenden Zahnreiheneinrichtung, wobei die innenliegende Zahnreiheneinrichtung wie folgt variiert ausgebildet ist:

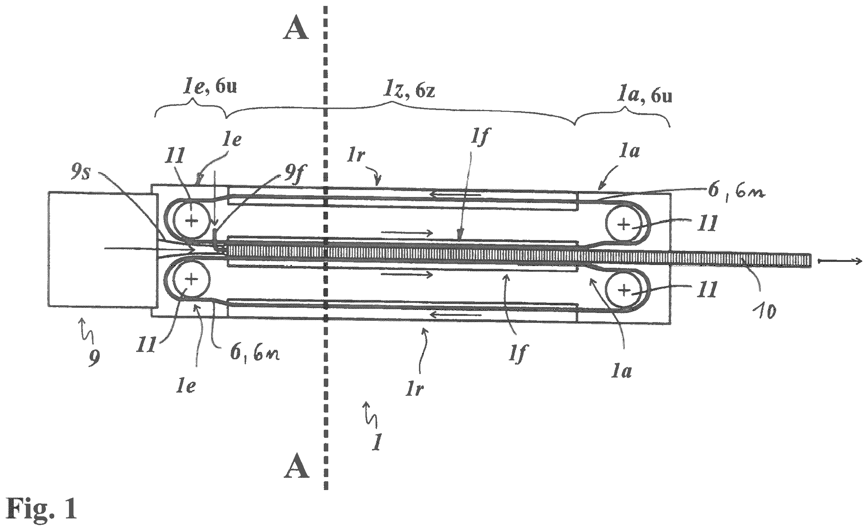

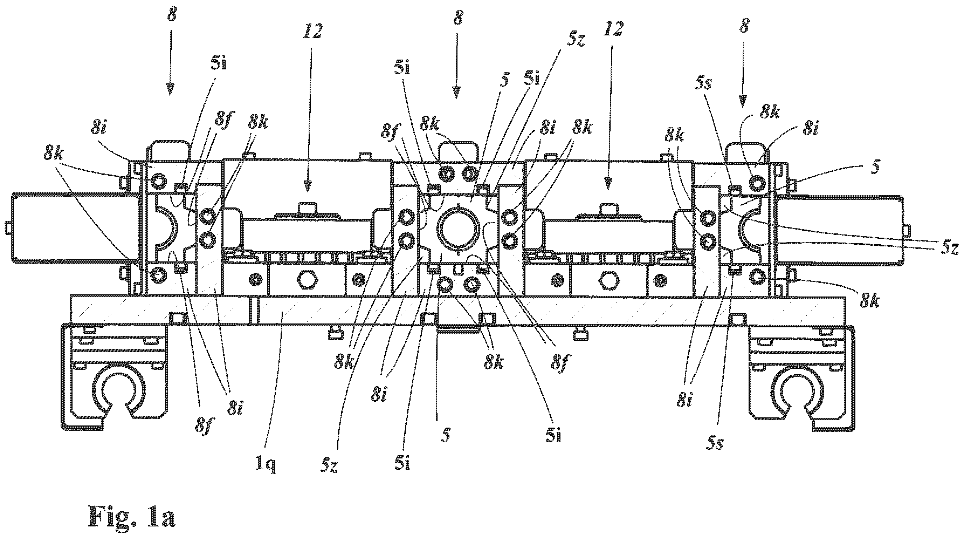

- in Fig. 9/1 eine in der Seitenfläche ausgebildete mittige innenliegende Zahnreihe,

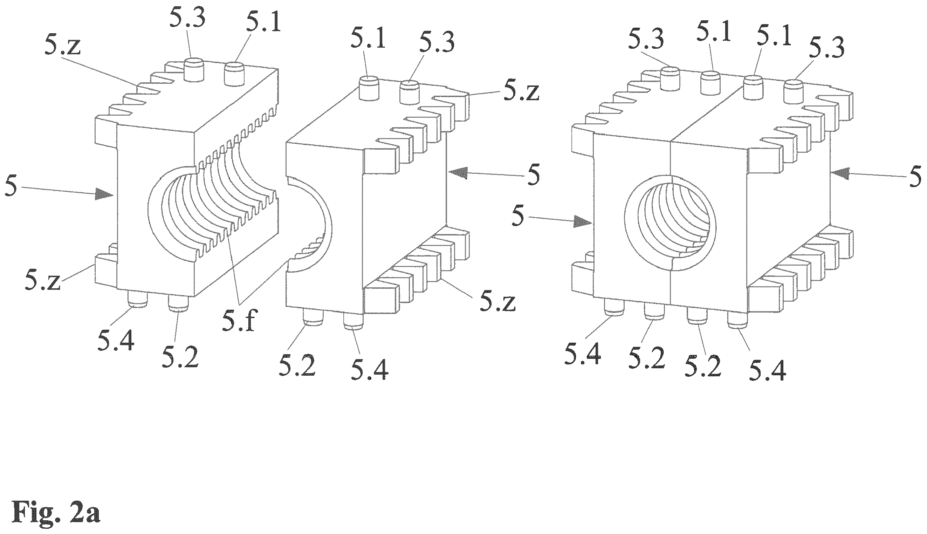

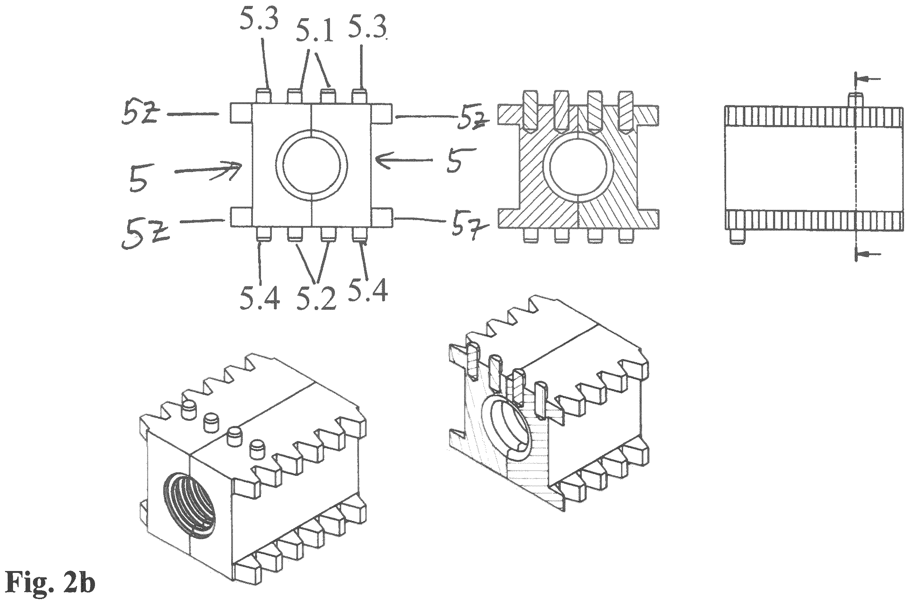

- in Fig. 9/2 eine mit Abstand unterhalb des oberen Randes der Seitenfläche ausgebildete obere innenliegende Zahnreihe und eine mit Abstand oberhalb des unteren Randes der Seitenfläche ausgebildete untere innenliegende Zahnreihe,

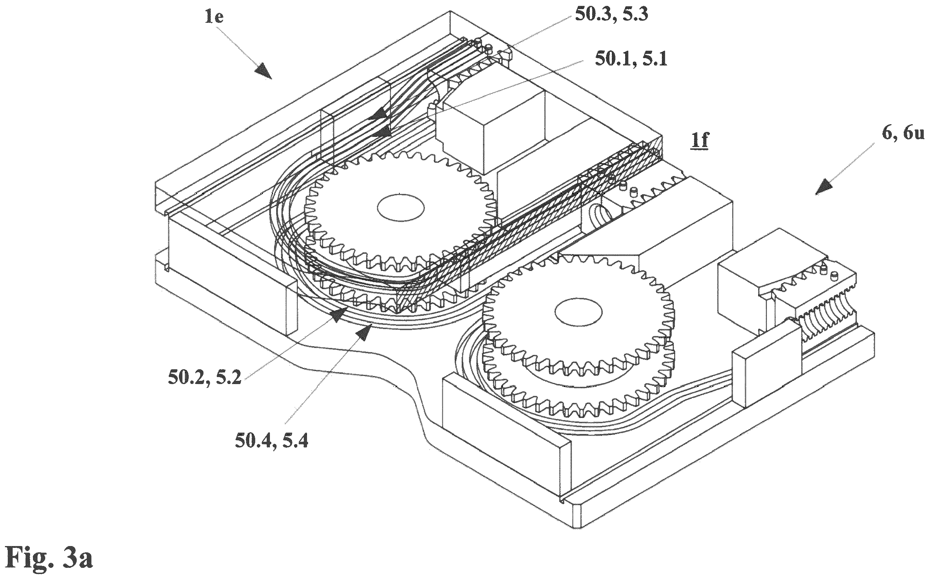

- in Fig. 9/3 eine unmittelbar in dem oberen Rand der Seitenfläche ausgebildete obere innenliegende Zahnreihe und eine unmittelbar im unteren Rand der Seitenfläche ausgebildete untere innenliegende Zahnreihe,
- in Fig. 9/4 identisch wie Fig. 9/3, jedoch die beiden Führungsstifte an der Unterseite in Produktionsrichtung gesehen hintereinander in gemeinsamer vertikaler Ebene fluchtend angeordnet, wie erkennbar in Verbindung Fig. 9/4s, die eine Seitenansicht in Fig. 9/4 darstellt; wobei
- in den Figuren 9-2/5u1, 9-2/5u2, 9-2/5u3, 9-2/5u4, 9-2/5u4' und 9-2/5u5 jeder Formbacken einen Führungsstift an der Oberseite und zwei Führungsstifte (hintereinander fluchtend) an der Unterseite und eine Zahnreiheneinrichtung an der Seitenfläche aufweist und dabei aber die Zahnreiheneinrichtung im Unterschied zu den vorangehenden Figuren 9/1 bis 9/4 unsymmetrisch über die Höhe der Seitenfläche ausgebildet ist und bei den Formbacken der Figuren variiert ist;
- in den Figuren 9-2/6v1 und 9-2/6v2 jeder Formbacken einen Führungsstift an der Oberseite und zwei Führungsstifte (hintereinander fluchtend) an der Unterseite und eine Zahnreiheneinrichtung an der Seitenfläche aufweist, die Zahnreiheneinrichtung unsymmetrisch über die Höhe der Seitenfläche ausgebildet ist und bei den Formbacken der Figuren variiert ist, dabei aber im Unterschied zu den vorangehenden Figuren die Formflächen in den Formbackenpaaren exzentrisch, und zwar nach unten entlang der Höhe der Formbacken versetzt ist;
- in den Figuren 9-2/7s1, 9-2/7s2 und 9-2/7s3 jeder Formbacken einen Führungsstift an der Oberseite und zwei Führungsstifte (hintereinander fluchtend) an der Unterseite und eine Zahnreiheneinrichtung an der Seitenfläche aufweist, dabei die Zahnreiheneinrichtung symmetrisch über die Höhe der Seitenfläche ausgebildet ist und die Zahnreiheneinrichtung bei den Formbacken der Figuren hinsichtlich der Anzahl der Zahnreihen und der Breite der Zahnreihen variiert ist;
- in den Figuren 9-2/8a1, 9-2/8a2, 9-2/8a3, 9-2/8a4 und 9-2/8a5 jeder Formbacken der Variante aus Figur 9-2/5u4' entspricht und dabei aber eine in die Formbacken von oben her eingreifende Vakuumeinrichtung 15 aufweist mit oberer Vakuumanschlusseinrichtung 15a und einer Vakuumkanaleinrichtung 15k, die die Formflächen 5f vom linken Formbacken und vom rechten Formbacken her umgibt;
- in den Figuren 9-2/9a, 9-2/9b und 9-2/9c die Formbacken ebenfalls der Variante aus Figur 9-2/5u4' entsprechen, dabei aber in Fig. 9-2/9a drei Führungsstifte (davon zwei hintereinander fluchtend) der Formbacken jeweils an der Unterseite der Formbacken angeordnet sind und in den Figuren 9-2/9b und 9-2/9c die drei Führungsstifte an der Oberseite der Formbacken angeordnet sind und die Formbacken in den Figuren 9-2/9a, 9-2/9b und 9-2/9c Vakuumeinrichtungen aufweisen, und zwar bei den Ausführungen in Figur 9-2/9a und 9-2/9b die Vakuumeinrichtung jeweils von oben her eingreifend mit oben angeordneter Anschlusseinrichtung und bei der Ausführung in Figur 9-2/9c die Vakuumeinrichtung von unten her eingreifend mit unten angeordneter Anschlusseinrichtung;

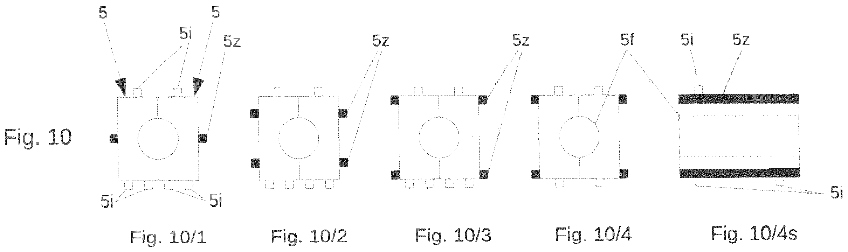

- in Fig. 9-2/10a die Formbacken anstelle von jeweils drei starr mit den Formbacken verbundenen Führungsstiften drei Führungsrollen, und zwar jeweils eine Führungsrolle 5ir an der Oberseite und zwei Führungsrollen 5ir (hintereinander fluchtend) an der Unterseite angeordnet sind und die Vakuumeinrichtung von oben her eingreifend ausgebildet ist;
- in den Figuren 9-2/11a, 9-2/11b und 9-2/11c Formbacken gezeigt sind, bei denen in den Formbacken jeweils eine Führungsrolle 5ir und zwei hintereinander fluchtende Führungsstifte 5i angeordnet sind, und zwar in Figur 9-2/11a und 9-2/11b jeweils zwei Führungsstifte (hintereinander fluchtend) an der Unterseite und eine Führungsrolle an der Oberseite und in Figur 9-2/11c umgekehrt, d.h. zwei Führungsrollen (hintereinander fluchtend) an der Unterseite und ein Führungsstift an der Oberseite ausgebildet sind. Die Ausführungen in den Figuren 9-2/11 weisen jeweils alle eine Vakuumeinrichtung 15 auf, in Figur 9-2/11a ist die Vakuumeinrichtung von unten her eingreifend, in den Figuren 9-2/11b und 9-2/11c ist die Vakuumeinrichtung von oben her eingreifend.
Bei sämtlichen Ausführungen der Figuren 9-2/8, 9-2/9, 9-2/10 und 9-2/11 sind die Formbacken hinsichtlich der Zahnreiheneinrichtung 5z auf der Seitenfläche der Formbacken und hinsichtlich der zentralen Lage der Formflächen 5f jeweils wie bei der Variante aus Figur 9-2/5u4' ausgebildet.
Es sind abgewandelte Ausführungen möglich, bei denen anstelle der an der Oberseite oder Unterseite hintereinander fluchtend angeordneten zwei Führungsstifte diese zwei Führungsstifte an der Oberseite oder Unterseite nicht hintereinander fluchtend angeordnet sind.

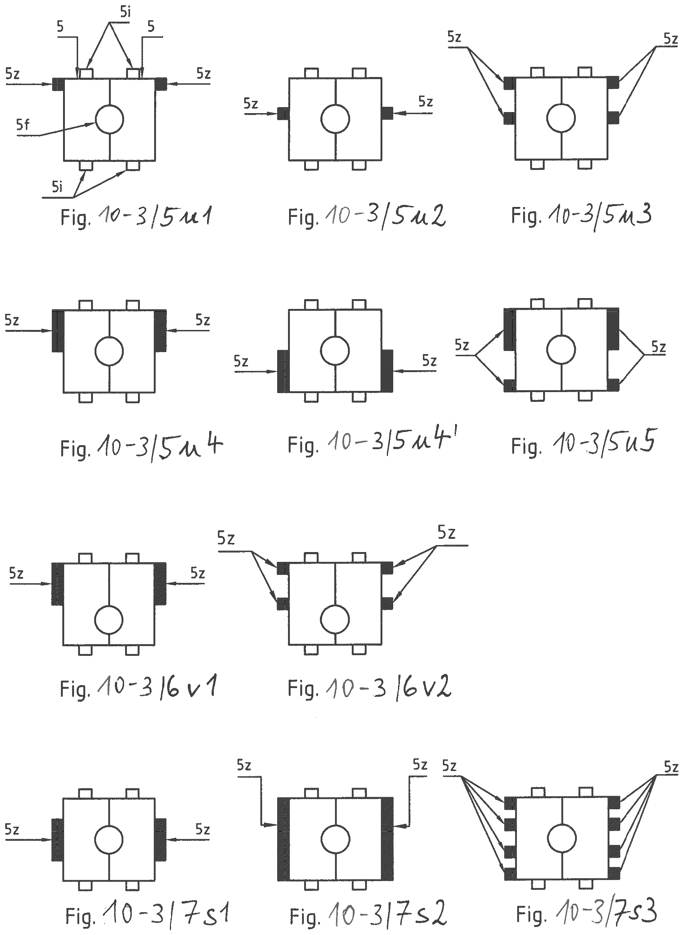

- Fig. 10: Formbacken mit einem Führungsstift an der Oberseite und zwei Führungsstiften an der Unterseite des Formbackens und einer an der Seitenfläche aufliegenden Zahnreiheneinrichtung, wobei die außenliegende Zahnreiheneinrichtung wie folgt variiert ausgebildet ist:
- in Fig. 10/1 eine in der Seitenfläche ausgebildete mittige aufliegende Zahnreihe, - in Fig. 10/2 eine mit Abstand unterhalb des oberen Randes der Seitenfläche ausgebildete obere aufliegende Zahnreihe und eine mit Abstand oberhalb des unteren Randes der Seitenfläche ausgebildete untere aufliegende Zahnreihe,
- in Fig. 10/3 eine unmittelbar in dem oberen Rand der Seitenfläche ausgebildete obere aufliegende Zahnreihe und eine unmittelbar im unteren Rand der Seitenfläche ausgebildete untere aufliegende Zahnreihe,
- in Fig. 10/4 identisch wie Fig. 10/3, jedoch die beiden Führungsstifte an der Unterseite in Produktionsrichtung gesehen hintereinander in gemeinsamer vertikaler Ebene fluchtend angeordnet, wie erkennbar in Verbindung Fig. 10/4s, die eine Seitenansicht der Fig. 10/4 darstellt; wobei
- in den Figuren 10-3/5u1, 10-3/5u2, 10-3/5u3, 10-3/5u4, 10-3/5u4' und 10-3/5u5 jeder Formbacken einen Führungsstift an der Oberseite und zwei Führungsstifte (hintereinander fluchtend) an der Unterseite und eine aufliegende Zahnreiheneinrichtung an der Seitenfläche aufweist und dabei aber die Zahnreiheneinrichtung unsymmetrisch über die Höhe der Seitenfläche ausgebildet ist und bei den Formbacken der Figuren variiert ist;
- in den Figuren 10-3/6v1 und 10-3/6v2 jeder Formbacken einen Führungsstift an der Oberseite und zwei Führungsstifte (hintereinander fluchtend) an der Unterseite und eine Zahnreiheneinrichtung an der Seitenfläche aufweist, die Zahnreiheneinrichtung aufliegend ausgebildet über die Höhe der Seitenfläche ausgebildet ist und bei den Formbacken der Figuren variiert ist, dabei aber die Formfläche in den Formbacken exzentrisch, und zwar entlang der Höhe der Formbacken versetzt ist;
- in den Figuren 10-3/7s1, 10-3/7s2 und 10-3/7s3 jeder Formbacken einen Führungsstift an der Oberseite und zwei Führungsstifte (hintereinander fluchtend) an der Unterseite und eine Zahnreiheneinrichtung an der Seitenfläche aufweist, dabei die Zahnreiheneinrichtung symmetrisch über die Höhe der Seitenfläche ausgebildet ist und die Zahnreiheneinrichtung bei den Formbacken der Figuren hinsichtlich der Anzahl der Zahnreihen und/oder der Breite der Zahnreihen variiert ist.
Es sind abgewandelte Ausführungen möglich, bei denen anstelle der an der Oberseite oder Unterseite hintereinander fluchtend angeordneten zwei Führungsstifte diese zwei Führungsstifte an der Oberseite oder Unterseite nicht hintereinander fluchtend angeordnet sind.

### 1. Der allgemeine Aufbau und die Grundfunktionen der erfindungsgemäßen Ausführungsbeispiele

Bei den Ausführungsbeispielen handelt es sich jeweils um eine Vorrichtung zum Herstellen von Kunststoffrohren. Der allgemeine Aufbau der Vorrichtung ist in den Figuren 1 und 1a gezeigt. Die Vorrichtung umfasst einen Extruder 9 mit Spritzkopf 9s und einen Korrugator 1. In den Korrugator 1 wird über den Spritzkopf 9s ein Kunststoffschmelzeschlauch zum Ausformen eines Kunststoffrohrs 10 eingeleitet.

Der Korrugator 1 arbeitet mit linken und rechten Formbacken 5. Erweist eine Formstrecke 1f auf, in der die linken und die rechten Formbacken 5 als Formbackenpaare in Produktionsrichtung geführt werden.

In einem linken und einem rechten Einlaufabschnitt 1e des Korrugators werden die linken und die rechten Formbacken 5 zum Anfang der Formstrecke 1f zu Formbackenpaare zusammengeführt.

In einem linken und einem rechten Auslaufabschnitt 1a des Korrugators werden die linken und die rechten Formbacken 5 der Formbackenpaare vom Ende der Formstrecke 1f auseinander geführt.

Die Formstrecke 1f ist in einem zwischen dem Einlaufabschnitt 1e und dem Auslaufabschnitt 1a angeordneten Zwischenabschnitt 1z des Korrugators ausgebildet. Ferner ist in den Zwischenabschnitt 1z beidseitig der Formstrecke 1f jeweils eine Rückführung 1r ausgebildet, nämlich eine Rückführung 1r für die linken Formbacken 5 und eine Rückführung 1r für die rechten Formbacken 5. In diesen Rückführungen 1r werden die linken bzw. die rechten Formbacken 5 vom Ende der Formstrecke 1f zum Anfang der Formstrecke 1f rückgeführt.

Die in der Formstrecke 1f hintereinander angeordneten Formbackenpaare liegen in der Formstrecke 1f stirnseitig aufeinander auf Stoß. Ein Formbackenpaar umfasst jeweils zwei spiegelbildlich ausgebildete Formbacken 5, nämlich einen linken und einen rechten Formbacken 5, deren Formflächen 5f die Negativform für das in der Vorrichtung ausgebildete Kunststoffrohr 10 bilden. Zur Ausbildung von Kunststoffwellrohren sind die Formflächen 5f wellenförmig. Die Formflächen 5f der in der Formstrecke 1f auf Stoß angeordneten Formbackenpaare bilden einen durchgehenden Formkanal.

Die linken Formbacken und die rechten Formbacken werden jeweils in einem in sich geschlossenen Formbackenumlauf endlos umgeführt. In dem linken Formbackenumlauf werden die linken Formbacken und im rechten Formbackenumlauf die rechten Formbacken geführt.

Die beiden Formbackenumläufe weisen jeweils im wesentlichen elliptische Form auf. Jeder Formbackenumlauf besteht aus einem geraden Abschnitt, der den Formstreckenabschnitt 1f bildet, einem in dem Formstreckenabschnitt hineinführenden Abschnitt, der den Einlaufabschnitt 1e bildet und einem aus dem Formstreckenabschnitt herausführenden Abschnitt, der den Auslaufabschnitt 1a bildet, sowie einem vorzugsweise geraden rückführenden Abschnitt, der die Rückführung 1r bildet und die Verbindung zwischen dem Auslaufabschnitt 1a und dem Einlaufabschnitt 1e darstellt.

Der Einlaufabschnitt 1e und der Auslaufabschnitt 1a sind jeweils Umlenkbereiche, in denen Umlenkritzel 11 angeordnet sind, die mit Zahnreiheneinrichtungen 5z der in den Umlenkbereichen geführten Formbacken zusammenwirken.

Der linke Formbackenumlauf und der rechte Formbackenumlauf sind so zueinander angeordnet, dass der Formstreckenabschnitt 1f des linken Formbackenumlaufs und der Formstreckenabschnitt 1f des rechten Formbackenumlaufs parallel aneinander liegen und die linken und die rechten Formbacken in dem Formbackenabschnitt als Formbackenpaare mit zueinander gewandten Formflächen 5f angeordnet sind.

Der düsenförmige Spritzkopf 9s des Extruders 9 ist mit seiner Ausgangsöffnung am Eingang der Formstrecke 1f angeordnet. Über den Spritzkopf 9s wird der Kunststoffschmelzeschlauch in die Formstrecke 1f des Korrugators eingespritzt. Über entsprechende Drucksteuerung werden die an der Innenseite und die an der Außenseite des Kunststoffschmelzeschlauchs in der Formstrecke 1f einwirkenden Drücke gesteuert. Abhängig von der Ausbildung der Düseneinrichtung des Spritzkopfs 1s können ein- oder mehrwandige Kunststoffrohre hergestellt werden.

Die Formbacken 5 sind in einer ortsfesten Führungseinrichtung 6 geführt. Die ortsfeste Führungseinrichtung 6 ist in dem dargestellten Ausführungsbeispiel zusammengesetzt aus
- einer Führungseinrichtung 6u in den Umlenkbereichen des Korrugators, d.h. in dem Umlenkbereich der linken und rechten Formbacken in den Einlaufabschnitt 1e und/oder in dem Umlenkbereich der linken und rechten Formbacken in den Auslaufabschnitt 1a und
- einer Führungseinrichtung 6z in dem Zwischenabschnitt des Korrugators mit der Formstrecke 1f zur Führung der Formbackenpaare und mit den Rückführungen 1r zur Führung der linken und rechten Formbacken 5 vom Ende der Formstrecke 1f zum Anfang der Formstrecke 1f.

Die Führungseinrichtung 6u in den Umlenkbereichen des Korrugators ist in dem dargestellten Ausführungsbeispiel der Figur 1 gebildet durch an den Formbacken 5 ausgebildete Führungsstifte, die in ortsfeste Führungsnuten in dem ortsfesten Führungsgestell eingreifen. Die Ausgestaltung der Führungsstifte und der zugeordneten Führungsnuten wird nachfolgend in Ziffer 2 noch im Detail erläutert.

Die Führungsstifte 5i werden in den Führungsnuten seitlich geführt, d.h. unter Abstützung seitlicher Kräfte. Die Formbacken 5 werden mit ihren Führungsflächen an der Unterseite unter vertikaler Gewichtsabstützung auf einer gestellfesten, horizontalen Auflagefläche gleitend geführt. Die gestellfeste Auflagefläche kann an den Führungsnuten angrenzend mit der Oberkante der Führungsnut fluchtend ausgebildet sein.

Die Führungseinrichtung 6z in dem Zwischenabschnitt des Korrugators ist durch eine Führungs- und/oder Temperierkörpereinrichtung 8 gebildet. Diese ist in Fig. 1 dargestellt. Sie weist eine Führungs- und/oder Temperierflächeneinrichtung mit Erhebungen oder Vertiefungen aufweisende Führungsausnehmungen und/oder ebenen Führungsflächen auf, die mit korrespondierenden Führungsausnehmungen und/oder Führungsflächen der passierenden Formbacken zusammenwirken. In den Temperierkörpern 8i sind vorzugsweise Temperierkanäle 8k ausgebildet, die durch Temperiermittel durchflossen sind.

Die Führungs- und/oder Temperierkörpereinrichtung 8 wird durch Führungsund/oder Temperierkörper 8i gebildet. Die Führungs- und/oder Temperierkörper 8i sind als längliche Körper ausgebildet mit Längserstreckung in Produktionsrichtung. In den Führungs- und/oder Temperierkörpern 8i sind in Längsrichtung verlaufende Temperierkanäle 8k ausgebildet, die von einem Temperiermittel durchflossen sind. Sie liegen in Längsrichtung hintereinander auf Stoß und in Querrichtung aufeinander und bilden einen Aufnahmeraum für die passierenden Formbacken bzw. Formbackenpaare.

In der Formstrecke 1f werden die passierenden Formbackenpaare von den Führungs- und/oder Temperierkörpern 8i bei dem dargestellten Ausführungsbeispiel vierseitig umgeben. In den Rückläufen 1r werden die passierenden Formbacken dreiseitig umgeben.

Die den Formbackenpaaren bzw. Formbacken zugewandten Flächen der Führungs- und/oder Temperierkörper 8i bilden Führungs- und/oder Temperierflächen 8f, auf denen die passierenden Formbacken unmittelbar aufliegend gleitend geführt sind oder mit geringem Abstand vorbeigleiten. Die unmittelbar aufliegende gleitende Führung erfolgt an der Unterseite und gegebenenfalls an einer Seitenfläche der Formbacken. Das Vorbeigleiten mit geringem Abstand erfolgt an der Oberseite der Formbacken.

Sowohl im Falle der unmittelbaren Auflage als auch im Falle des geringen Abstandes erfolgt über die Führungs- und/oder Temperierflächen eine Wärmeübertragung im Sinne einer Temperierung der Formbacken. Im Fall der unmittelbaren Auflage auf den Führungs- und/oder Temperierflächen 8f erfolgt zusätzlich zur Temperierung eine flächige Gleitführung der Formbacken.

In der Führungs- und/oder Temperierkörpereinrichtung 8 sind zusätzlich zu den Führungs- und/oder Temperierflächen 8f Führungsnuten ausgebildet zur Aufnahme und Führung der an den Formbacken ausgebildeten Führungsstifte. Die Führungsnuten in den Führungs- und/oder Temperierkörpern 8i werden gebildet, indem zwischen aneinander angrenzenden Führungs- und/oder Temperierkörpern 8i längsnutenförmige Zwischenräume gebildet sind. Sie können bei abgewandelten Ausführungen aber auch durch Längsnuten gebildet werden, die in den einzelnen Führungs- und/oder Temperierkörpern ausgebildet sein können.

Bei abgewandelten Ausführungen können auch in der Führungseinrichtung 6u der Umlenkbereiche ortsfeste Führungs- und/oder Temperierkörper 8i angeordnet sein, in die die in den Formbacken ausgebildeten Führungsstifte 5i zur Führung der Formbacken eingreifen und über die Führungs- und/oder Temperierflächen der Führungs- und/oder Temperierkörper zusätzlich auch eine Temperierung erfolgt.

Alternativ oder zusätzlich können auch in der Führungseinrichtung 6z in dem Zwischenabschnitt des Korrugators die an den Formbacken 5 ausgebildeten Führungsstifte in Führungsnuten in dem ortsfesten Führungsgestell eingreifen. Es kann sich um Führungsnuten handeln, die in oder an den ortsfesten Führungsund/oder Temperierkörpern 8i ausgebildet sind und/oder um Führungsnuten, die in dem Führungsgestell außerhalb der Führungs- und/oder Temperierkörper 8i ausgebildet sind.

Die Führungsnuten in der Führungs- und/oder Temperierkörpereinrichtung 8 können mit den Führungsstiften im Sinne einer Gleitführung zusammenwirken. Sie können aber auch mit Spiel zu den Führungsstiften ausgebildet sein und die Führungsstifte lediglich aufnehmen, wenn die Formbacken die Führungsund/oder Temperierkörpereinrichtung 8 durchlaufen. Die Gleitführung zwischen den Formbacken und der Führungs- und/oder Temperierkörpereinrichtung kann zwischen den Außenflächen der Formbacken und den Führungsflächen der Führungs- und/oder Temperierkörper ausgebildet sein.

### 2. Die erfindungsgemäße Ausgestaltung der Führungsstifte und ihr Eingriff in die zugeordneten Führungsnuten bei den erfindungsgemäßen Ausführungsbeispielen

Im Nachfolgenden werden anhand der erfindungsgemäßen Ausführungsbeispiele der Figuren die Alternativen a), b), c) des Anspruchs 1 erläutert.

Die zum Einsatz vorzugsweise vorgesehenen Formbacken 5 sind in den Figuren 2 bis 8 dargestellt. Diese Formbacken weisen jeweils vier Führungsstifte 5i auf. Die Führungsstifte 5i sind in den Figuren mit 5.1, 5.2, 5.3 und 5.4 bezeichnet. Die Formbacken 5 in den Figuren 9 und 10 sind Abwandlungen. Sie weisen jeweils nur drei Führungsstifte 5i auf. In diesen Figuren sind die Führungsstifte mit 5i bezeichnet. Die zugeordneten Führungsnuten 50i, in die die Führungsstifte eingreifen, sind in den Figuren mit 50.1, 50.2, 50.3 und 50.4 bezeichnet.

Bei den in den Figuren dargestellten Ausführungsbeispielen ist **Anspruch 1, Alternative a)** umgesetzt, und zwar wie folgt:
In dem Umlenkbereich, der in den Einlauf in die Formstrecke 1f führt, sind nur die **Führungsstifte 5.1 und 5.2** form- und/oder kraftschlüssig in die zugeordneten Führungsnuten 50.1 und 50.2 eingreifend für die Führung der Formbacken wirksam. Die Führungsstifte 5.3 und 5.4 sind während dieser Phase nicht wirksam, und zwar durch Maßnahmen, die für die Führung dieser Führungsstifte 5.3 und 5.4 einen formschlüssigen und/oder kraftschlüssigen Eingriff eliminieren und/oder zumindest deutlich reduzieren, z.B. indem die Maßnahmen der Unteransprüche 3 bis 7 dort umgesetzt sind.

Im Umlenkbereich, der in den Auslauf in die Formstrecke 1f führt, sind bei diesen Ausführungsbeispielen nur die **Führungsstifte 5.3 und 5.4** form- und kraftschlüssig in die zugeordneten Führungsnuten 50.3 und 50.4 eingreifend für die Führung der Formbacken wirksam, d.h. in Wirkstellung. Die Führungsstifte 5.1 und 5.2 sind während dieser Phase in diesem Bereich nicht wirksam, d.h. in Wirklosstellung, und zwar durch Umsetzung von Maßnahmen, die für diese Führung dieser Führungsstifte 5.1 und 5.2 einen formschlüssigen und/oder kraftschlüssigen Eingriff eliminieren und/oder zumindest deutlich reduzieren, z.B. durch Maßnahmen der Unteransprüche 3 bis 7.

Dies bedeutet, dass bei einem Durchlauf der Formbacken durch den Korrugator bei diesen Ausführungsbeispielen in dem Umlenkbereich, der in den Einlauf in die Formstrecke führt, automatisch nur die Führungsstifte 5.1 und 5.2 wirksam sind und in dem Umlenkbereich, der in den Auslauf in die Formstrecke führt, automatisch nur die Führungsstifte 5.3 und 5.4 wirksam sind. Dies bedeutet, dass die gemäß Anspruch 1, Alternative a) vorgesehene Ausbildung einer phasenweisen Wirkstellung oder Wirklosstellung einzelner Bereiche der Führung sich beim Durchlauf der Formbacken durch den Korrugator jeweils automatisch sich einstellt.

Was die Wirksamkeit oder Unwirksamkeit der Führungsstifte in dem Zwischenabschnitt 1z des Korrugators betrifft, d.h. in der Formstrecke 1f und in der Rückführung 1r gilt folgendes: Es sind unterschiedliche Ausführungsvarianten möglich:
Bei einer ersten Ausführungsvariante kann vorgesehen sein, dass in der Formstrecke weiterhin die im Einlauf wirksamen Führungsstifte 5.1 und 5.2 wirksam sind und die Führungsstifte 5.3 und 5.4 unwirksam sind; während in dem Rückführungsbereich 1r die im Auslauf wirksamen Führungsstifte 5.3 und 5.4 wirksam sind und die Führungsstifte 5.1 und 5.2 unwirksam sind.

Bei einer zweiten Ausführungsvariante kann vorgesehen sein, dass in der Formstrecke 1f bereits die im Auslauf wirksamen Führungsstifte 5.3 und 5.4 weiterhin wirksam sind und die Führungsstifte 5.1 und 5.2 unwirksam sind.

Bei einer dritten Ausführungsvariante kann vorgesehen sein, dass sowohl in der Formstrecke 1f als auch in dem Rücklauf 1r keine der Führungsstifte wirksam sind, sondern lediglich die Führungs- und/oder Temperierflächen der Führungsund/oder Temperierkörpereinrichtung 8 mit den Formbacken im Sinne einer Führung zusammenwirken. Die Führungsstifte können in diesem Fall in nutenförmige Ausnehmungen mit Spiel eingreifen, d.h. sie greifen nicht kraftschlüssig und nicht formschlüssig ein.

Die dargestellten Ausführungsbeispiele können nun aber auch dahingehend abgewandelt werden, dass der **Anspruch 1, Alternative b)** umgesetzt ist, und zwar derart, dass z.B. die **Führungsstifte 5.1 und 5.2** in allen Bereichen permanent wirksam sind und die Führungsstifte 5.3 und 5.4 in allen Bereichen permanent unwirksam sind oder nur reduziert wirksam sind. Um diese permanente Unwirksamkeit oder nur reduzierte Wirksamkeit der Führungsstifte 5.3 und 5.4 zu realisieren, sodass dann also diese Führungsstifte 5.3 und 5.4 im gesamten Bereich unwirksam sind und/oder lediglich sekundär mitlaufen, werden für diese Führungsstifte die Maßnahmen gemäß der Unteransprüche 3 bis 7 umgesetzt. Diese Führungsstifte 5.3 und 5.4 können dann im Sinne einer Lastenaufteilung oder im Sinne einer Verschleißreduktion der Führungsstifte dienen. Die lediglich mitlaufenden Führungsstifte 5.3, 5.4 können damit auch für einen Notlauf oder für den Fall, dass die wirksamen Führungsstifte 5.1 und 5.2 einen wesentlichen Verschleiß haben, eine Sicherheits- und Notlaufeigenschaft realisieren.

Die dargestellten Ausführungsbeispiele können ferner auch dahingehend abgewandelt werden, dass der **Anspruch 1, Alternative c)** umgesetzt ist. Dies bedeutet, dass in diesem Falle alle **Führungsstifte 5.1, 5.2, 5.3 und 5.4** möglichst gleichmäßig formschlüssig und/oder kraftschlüssig in Eingriff mit den ihnen zugeordneten Führungsnuten sind und damit parallele redundante Führungen ausgebildet werden. Die Umsetzung dieser Ausführungen mit parallelen redundanten Führungen bedeutet einen relativ hohen technischen Standard. Für die Realisierung paralleler redundanter Führungen müssen Blockiersituationen aufgrund Überbestimmung verhindert werden. Um die parallelen redundanten Führungen permanent zu realisieren, kann es von Vorteil sein, wenn bei sämtlichen Führungen in einem gewissen Maße, d.h. zu einem gewissen Grad, der formschlüssige und/oder kraftschlüssige Eingriff der Führungsstifte durch die Umsetzung von Maßnahmen der Unteransprüche 3 bis 7 reduziert ist. Vorzugsweise kann diese Reduktion für alle Führungen möglichst gleichmäßig und in möglichst nur geringem Maße erfolgen, um die bei den Ausführungen gemäß Anspruch 1, Alternative c) angestrebten parallelen redundanten Führungen für alle Führungsstifte in ihren zugeordneten Führungsnuten möglichst optimal zu realisieren.

Bei den Ausführungsbeispielen der Figuren 2 bis 8 weist jeder Formbacken 5 jeweils insgesamt vier Führungsstifte 5i auf, nämlich die Führungsstifte 5.1, 5.2, 5.3 und 5.4. Mindestens zwei der Führungsstifte sind jeweils in Produktionsrichtung zueinander versetzt, um im Umlenkbereich die Schwenkbewegung des Formbackens zu erhalten.

Bei gegenüber den Ausführungsbeispielen der Figuren 2 bis 8 abgewandelten Ausführungsbeispielen kann vorgesehen sein, dass die Formbacken eine andere Anzahl Führungsstifte 5i aufweisen, d.h. im Unterschied zu den in den Figuren 2 bis 8 dargestellten Ausführungsbeispielen, z.B. jeder Formbacken nur insgesamt drei Führungsstifte oder jeder Formbacken insgesamt mehr als vier Führungsstifte.

Die Figuren 9 und 10 zeigen solche Ausführungsbeispiele mit am Formbacken 5 jeweils insgesamt drei Führungsstiften 5i. In dem dort dargestellten Fall sind jeweils zwei Führungsstifte an der Unterseite und nur ein Führungsstift an der Oberseite am Formbacken angeordnet.

Das Ausführungsbeispiel der Fig. 9/4 unterscheidet sich in der Anordnung der Führungsstifte vom Ausführungsbeispiel der Fig. 9/3 darin, dass in Fig. 9/4 die an der Unterseite der Formbacken angeordneten zwei Führungsstifte 5i in Produktionsrichtung hintereinander in einer gemeinsamen vertikalen Ebene angeordnet sind. Entsprechendes gilt für die Ausführungsbeispiele der Figuren 10/4 und 10/3.

Bei diesen Ausführungsbeispielen können die Alternativen a, b und c des Hauptanspruchs 1 umgesetzt werden. Hierfür kann z.B. vorgesehen sein, dass für die Umsetzung der Alternative a in den Umlenkbereichen unterschiedliche Führungsstifte 5i wirksam und unwirksam sind. Im Nachfolgenden wird für die Abhandlung der Alternativen a, b und c der obere Führungsstift 5i als der erste Führungsstift, der untere äußere Führungsstift als der zweite Führungstift und der untere innere Führungsstift als der dritte Führungsstift bezeichnet. Es ist zur Umsetzung der Alternativen dann möglich, dass in dem Umlenkbereich des Einlaufabschnitts der erste Führungsstift und der zweite Führungsstift wirksam ist, während der dritte Führungsstift unwirksam ist. In dem Umlenkbereich des Auflaufabschnitts ist dann der erste Führungsstift und der dritte Führungsstift wirksam, während der zweite Führungsstift unwirksam ist.

Für die Umsetzung der Alternative b kann vorgesehen sein, dass die Führung primär mit dem ersten Führungsstift und dem zweiten Führungsstift erfolgt, und der dritte Führungsstift lediglich sekundär mitläuft.

Für die Umsetzung der Alternative c kann vorgesehen sein, dass der erste Führungsstift und der zweite Führungsstift permanent form- und/oder kraftschlüssig in den zugeordneten Führungsnuten geführt sind und der dritte Führungsstift permanent redundant ebenfalls form- und/oder kraftschlüssig in der zugeordneten Führungsnut geführt ist.

Ein weiterer Aspekt ist, dass die in den Figuren 9 und 10 dargestellten Ausführungsbeispiele eine Zahnreiheneinrichtung 5z aufweisen, die sich von der Zahnreiheneinrichtung 5z der in den Figuren 2 bis 8 dargestellten Ausführungsbeispielen unterscheiden. Bei den Figuren 2 bis 8 sind die dargestellten Zahnreiheneinrichtungen 5z als aufliegende Zahnreiheneinrichtungen ausgebildet, und zwar jeweils mit einer an dem oberen Rand des Formbacken ausgebildeten Zahnreihe und einer an dem unteren Rand des Formbacken ausgebildeten Zahnreihe.

Bei den Ausführungsbeispielen in der Fig. 9 sind im Unterschied hierzu die Zahnreiheneinrichtungen 5z als innenliegende Zahnreiheneinrichtung 5z ausgebildet, und zwar wie folgt:
Bei dem Ausführungsbeispiel in Fig. 9/1 ist die Zahnreiheneinrichtung 5z durch eine an der Seitenfläche mittig angeordnete innenliegende Zahnreihe ausgebildet.

Bei dem Ausführungsbeispiel in Fig. 9/2 ist die Zahnreiheneinrichtung 5z an der Seitenfläche des Formbackens durch eine im Bereich des oberen Randes ausgebildeten innenliegenden Zahnreihe und eine im Bereich des unteren Randes ausgebildeten innenliegenden Zahnreihe ausgebildet, wobei die jeweiligen Zahnreihen jeweils nicht unmittelbar in dem Rand, d.h. nicht unmittelbar in der oberen Kante oder in der unteren Kante, sondern mit Abstand zu der jeweiligen Kante ausgebildet sind.

Bei dem Ausführungsbeispiel der Figuren 9/3 und 9/4 ist die Zahnreiheneinrichtung 5z durch eine unmittelbar in der oberen Kante ausgebildete obere Zahnreihe und eine unmittelbar in der unteren Kante ausgebildete untere Zahnreihe gebildet.

Bei den Ausführungsbeispielen der Figuren 10 ist die Zahnreiheneinrichtung 5z im Unterschied zu der Zahnreiheneinrichtung der Ausführungsbeispiel der Figur 9 nicht als innenliegende Zahnreiheneinrichtung, sondern als aufliegende Zahnreiheneinrichtung ausgebildet. In allen übrigen Details können die Ausführungen der Formbacken identisch wie in Fig. 9 sein.

Es sei ausdrücklich darauf hingewiesen, dass bei den Ausführungsbeispielen der Figuren 2 bis 8 die dort vorgesehenen aufliegenden Zahnreiheneinrichtungen bei entsprechend abgewandelten Ausführungsbeispielen als innenliegende Zahnreiheneinrichtungen, wie sie in den Figuren 9 vorgesehen sind, oder als aufliegende Zahnreiheneinrichtungen 5z, wie sie in Figur 10 vorgesehen sind, ausgebildet sein können.

### Bezugszeichenliste

- 1: Korrugator
- 1a: Auslaufabschnitt
- 1e: Einlaufabschnitt
- 1f: Formstrecke
- 1r: Rückführung
- 1q: Querträger
- 1z: Zwischenabschnitt
- 5: Formbacken
- 5f: Formfläche
- 5i: Führungsstift
- 5.1, 5.2, 5.3, 5.4: Führungsstifte 5i
- 50i: Führungsnut
- 50.1, 50.2, 50.3, 50.4: Führungsnuten 50i
- 5z: Zahnreiheneinrichtung
- 6: ortsfeste Führungseinrichtung
- 6u: Führungseinrichtung im Umlenkbereich des Korrugators
- 6z: Führungseinrichtung im Zwischenbereich des Korrugators
- 8: Führungs- und/oder Temperierkörpereinrichtung
- 8i: Führungs- und/oder Temperierkörper
- 8k: Temperierkanal
- 8u: Temperierkanalumleitung
- 8f: Temperierfläche
- 9: Extruder
- 9f: Formluftzuführung
- 10: Kunststoffrohr
- 9s: Spritzkopf
- 11: Umlenkritzel
- 12: Spielausgleichseinrichtung mit Ritzeleinrichtung eingreifend in Zahnreiheneinrichtung der Formbackenpaare geführt in der Formstrecke

## Patentansprüche

1. Vorrichtung zum Herstellen von Kunststoffrohren, vorzugsweise Kunststoffwellrohren (10),
mit einem Extruder (9) mit Spritzkopf (9s) und einem Korrugator (1), in den über den Spritzkopf (9s) ein Kunststoffschmelzeschlauch zum Ausformen des Kunststoffrohres (10) eingeleitet wird, wobei vorgesehen ist,
- dass der Korrugator (1) eine Formstrecke (1f) aufweist, in der Formbacken (5) paarweise in Produktionsrichtung geführt werden,
- dass in einem Einlaufabschnitt (1e) des Korrugators (1) die Formbacken (5) zu Formbackenpaaren zum Anfang der Formstrecke (1f) zusammengeführt werden,
- dass in einem Auslaufabschnitt (1a) des Korrugators (1) die Formbackenpaare vom Ende der Formstrecke (1f) auseinander geführt werden,
- dass in einem zwischen dem Einlaufabschnitt (1e) und dem Auslaufabschnitt (1a) angeordneten Zwischenabschnitt (1z) des Korrugators (1) die Formstrecke (1f) zur Führung der Formbackenpaare ausgebildet ist und mindestens eine Rückführung (1r) ausgebildet ist, in der die Formbacken (5) vom Ende der Formstrecke (1f) zum Anfang der Formstrecke (1f) rückgeführt werden,
- dass der Korrugator eine ortsfeste Führungseinrichtung (6, 8, 8i) zur Führung der Formbacken (5) aufweist,
- dass jeder Formbacken (5) einen ersten Führungsstift (5.1) und einen zweiten Führungsstift (5.2) aufweist und die Formbacken (5) in der Führungseinrichtung (6, 8, 8i) geführt sind, indem der erste Führungsstift (5.1) mit seinem freien Ende in eine erste Führungsnut (50.1) der Führungseinrichtung (6, 8, 8i) eingreift und der zweite Führungsstift (5.2) mit seinem freien Ende in eine zweite Führungsnut (50.2) der Führungseinrichtung (6, 8, 8i) eingreift,
- dass zwischen dem ersten Führungsstift (5.1) und dem zweiten Führungsstift (5.2.) ein Abstand entlang der Erstreckung des Formbackens (5) in Produktionsrichtung ausgebildet ist,
- dass der erste Führungsstift (5.1) und der zweite Führungsstift (5.2) an derselben Seite des Formbackens (5) angeordnet sind oder an unterschiedlichen Seiten des Formbackens (5), vorzugsweise an gegenüberliegenden Seiten des Formbackens (5) angeordnet sind,
**dadurch gekennzeichnet,**
**dass** der Formbacken zusätzlich zu dem ersten Führungsstift (5.1) und dem zweiten Führungsstift (5.2) einen zusätzlichen weiteren Führungsstift (5.3) oder mehrere zusätzliche weitere Führungsstifte (5.3, 5.4) aufweist, wobei der zusätzliche weitere Führungsstift (5.3) oder die zusätzlichen weiteren Führungsstifte (5.3, 5.4) jeweils in eine separate zugeordnete Führungsnut (50.3, 50.4) der Führungseinrichtung eingreift bzw. eingreifen, und/oder mit einer zugeordneten Führungsfläche oder Führungskante der Führungseinrichtung zusammenwirkt bzw. zusammenwirken, und zwar
a) unter Ausbildung einer phasenweisen, vorzugsweise wechselweisen Wirkstellung oder Wirklosstellung einzelner Bereiche der Führungseinrichtung (6, 8, 8i), und/oder
b) unter Ausbildung eines nicht formschlüssigen und/oder nicht kraftschlüssigen Eingriffs in die zugeordnete Führungsnut im Sinne einer lediglich sekundären Mitführung, und/oder
c) unter Ausbildung eines formschlüssigen und/oder kraftschlüssigen Eingriffs in die zugeordnete Führungsnut im Sinne einer parallelen redundanten Führung oder im Sinne einer Führung, die Kräfte des zusätzlichen weiteren Führungsstiftes oder der zusätzlichen weiteren Führungsstifte abstützt, die anders gerichtet sind als die in der Führungsnut des ersten Führungsstiftes und/oder des zweiten Führungsstiftes abgestützten Kräfte.

2. Vorrichtung nach Anspruch 1,
**dadurch gekennzeichnet,**
**dass** zur Ausbildung einer Wirkstellung oder Wirklosstellung gemäß Alternative a) der zusätzliche weitere Führungsstift (5.3) oder die zusätzlichen weiteren Führungsstifte (5.3, 5.4) in die zugeordnete zusätzliche Führungsnut (50.3, 50.4) eingreift bzw. eingreifen, indem dieser Führungsstift (5.3) bzw. diese Führungsstifte (5.3, 5.4) in einem Abschnitt der zugeordneten Führungsnut (50.3, 50.4) formschlüssig und/oder kraftschlüssig eingreift bzw. eingreifen unter Ausbildung der Wirkstellung und in einem anderen Abschnitt der Führungsnut (50.3, 50.4) nicht formschlüssig und/oder nicht kraftschlüssig eingreift bzw. eingreifen unter Ausbildung der Wirklosstellung.

3. Vorrichtung nach Anspruch 1 oder 2,
**dadurch gekennzeichnet,**
**dass** in einem ersten Abschnitt der Führungseinrichtung vorzugsweise in dem Umlenkbereich mit anschließendem Einlaufabschnitt (1e) der erste Führungsstift (5.1) und der zweite Führungsstift (5.2) in Wirkstellung sind, und dabei der dritte Führungsstift (5.3) und der vierte Führungsstift (5.4) in Wirklosstellung sind, und
**dass** in einem zweiten Abschnitt der Führungseinrichtung, vorzugsweise in dem Auslaufabschnitt (1a) mit anschließendem Umlenkbereich der dritte Führungsstift (5.3) und der vierte Führungsstift (5.4) in Wirkstellung sind, und dabei der erste Führungsstift (5.1) und der zweite Führungsstift (5.2) in Wirklosstellung sind.

4. Vorrichtung nach einem der vorangehenden Ansprüche, vorzugsweise nach Alternative c des Hauptanspruchs 1,
im Sinne einer Führung, die Kräfte des zusätzlichen weiteren Führungsstiftes oder der zusätzlichen weiteren Führungsstifte abstützt, die anders gerichtet sind als die in der Führungsnut des ersten Führungsstiftes und/oder des zweiten Führungsstiftes abgestützten Kräfte,
**dadurch gekennzeichnet,**
**dass** der erste Führungsstift und der zweite Führungsstift an der Oberseite und/oder an der Unterseite des Formbackens, vorzugsweise vertikal ausgerichtet, ausgebildet ist bzw. sind, und
**dass** der zusätzliche weitere Führungsstift oder die weiteren Führungsstifte an der Oberseite und/oder an der Unterseite des Formbackens, vorzugsweise vertikal ausgerichtet, ausgebildet ist bzw. sind.

5. Vorrichtung nach Anspruch 4,
**dadurch gekennzeichnet,**
**dass** der erste Führungsstift und der zweite Führungsstift unter Abstützung von Seitenkräften, vorzugsweise horizontal gerichtete Seitenkräfte des Führungsstiftes, jeweils in die zugeordnete Führungsnut der Führungseinrichtung eingreift, und
**dass** der zusätzliche weitere Führungsstift oder die zusätzlichen weiteren Führungsstifte unter Abstützung von Axialkräften des Führungsstiftes, vorzugsweise vertikal gerichtete Axialkräfte, in die zugeordnete Führungsnut eingreift bzw. eingreifen und/oder mit der zugeordneten Führungsfläche und/oder Führungskante der Führungseinrichtung zusammenwirkt bzw. zusammenwirken.

6. Vorrichtung nach einem der vorangehenden Ansprüche, vorzugsweise nach Alternative c des Hauptanspruchs 1,
im Sinne einer Führung, die Kräfte des zusätzlichen weiteren Führungsstiftes oder der zusätzlichen weiteren Führungsstifte abstützt, die anders gerichtet sind als die in der Führungsnut des ersten Führungsstiftes und/oder des zweiten Führungsstiftes abgestützten Kräfte,
**dadurch gekennzeichnet,**
**dass** der ersten Führungsstift und der zweite Führungsstift an der Oberseite und/oder an der Unterseite des Formbackens, vorzugsweise vertikal ausgerichtet, ausgebildet sind, und
**dass** der zusätzliche weitere Führungsstift oder die zusätzlichen weiteren Führungsstifte an einer Seitenfläche des Formbackens die von der Formfläche des Formbackens abgewandt ist, ausgebildet ist bzw. sind, vorzugsweise horizontal ausgerichtet.

7. Vorrichtung nach einem der vorangehenden Ansprüche,
**dadurch gekennzeichnet,**
**dass** die ortsfeste Führungseinrichtung (6, 8) zur Führung der Formbacken (5) eine Führungs- und/oder Temperierkörpereinrichtung (8) aufweist, die vorzugsweise in dem Zwischenabschnitt des Korrugators im Bereich der Formstrecke (1f) zur Führung der Formbackenpaare (5, 5) und/oder im Bereich der Rückführung (1r) zur Führung der Formbacken (5) vom Ende der Formstrecke (1f) zum Anfang der Formstrecke (1f) ausgebildet ist.

8. Vorrichtung nach Anspruch 7,
**dadurch gekennzeichnet,**
**dass** die Führungs- und/oder Temperierkörpereinrichtung (8) aus mehreren in Führungsrichtung axial hintereinander auf Stoß angeordneten Temperierkörpern (8i) ausgebildet ist und/oder aus mehreren quer zur Führungsrichtung nebeneinander angeordneten Temperierkörpern (8i) ausgebildet ist,
wobei vorzugsweise vorgesehen ist, dass in dem Temperierkörper (8i) und/oder in den Temperierkörpern (8i) ein oder mehrere Temperiermittelkanal bzw. Temperiermittelkanäle (8k) ausgebildet sind, der bzw. die von einem Temperiermittel durchströmt ist bzw. sind.

9. Vorrichtung nach einem der Ansprüche 7 oder 8,
**dadurch gekennzeichnet,**
**dass** die ortsfeste Führungseinrichtung der Formbacken durch je eine ortsfeste Führungseinrichtung (6u) in den Umlenkbereichen und durch eine ortsfeste Führungseinrichtung (6z) in dem Zwischenabschnitt gebildet ist, wobei vorzugsweise vorgesehen ist,
**dass** die ortsfeste Führungseinrichtung (6u) in jedem Umlenkbereich eine Gestelleinrichtung und/oder eine Bodenplatteneinrichtung und/oder eine Deckenplatteneinrichtung aufweist, an oder in der die Führungsnuten angeordnet sind und die eine Führungsflächeneinrichtung zur gleitenden Führung der Unterseite der passierenden Formbacken (5) aufweist; und dass die ortsfeste Führungseinrichtung (6u) in dem Zwischenabschnitt (1z) eine Führungs- und oder Temperierkörpereinrichtung (8) aufweist, die die passierenden Formbacken zumindest teilweise umgibt und Führungsund/oder Temperierflächen zur gleitenden Führung mit den Außenflächen der Formbacken (5) aufweist.

10. Vorrichtung nach einem der vorangehenden Ansprüche,
**dadurch gekennzeichnet,**
**dass** an einer Seitenfläche jedes Formbackens (5) eine Zahnreiheneinrichtung (5z) ausgebildet ist, die mit einer Umlenkritzeleinrichtung in den Umlenkbereichen zusammenwirken und/oder mit einer Ritzeleinrichtung im Zwischenabschnitt des Korrugators, vorzugsweise der Formstrecke zusammenwirkt.

11. Vorrichtung nach Anspruch 10,
**dadurch gekennzeichnet,**
**dass** die Zahnreiheneinrichtung (5z) als innenliegende Zahnreiheneinrichtung ausgebildet ist, die durch eine innenliegende Zahnreihe oder mehrere innenliegende Zahnreihen gebildet ist, wobei die Zähne und/oder die Zahnlücken der Zahnreihe jeweils vorzugsweise senkrecht zur Seitenfläche gerichtet sind und in die Seitenfläche eingreifend und vorzugsweise nicht über die Seitenfläche überstehend ausgebildet sind,
oder
**dass** die Zahnreiheneinrichtung (5z) als aufliegende Zahnreiheneinrichtung ausgebildet ist, die durch eine aufliegende Zahnreihe oder mehrere aufliegende Zahnreihen gebildet ist, wobei die Zähne und/oder Zahnlücken der Zahnreihe jeweils vorzugsweise senkrecht zur Seitenfläche gerichtet sind und vorzugsweise auf der Seitenfläche aufliegend und über die Seitenfläche überstehend ausgebildet sind.

12. Vorrichtung nach Anspruch 11,
**dadurch gekennzeichnet,**
**dass** die Zahnreiheneinrichtung, an der Seitenfläche des Formbacken bezüglich der Höhe der Seitenfläche unsymmetrisch verteilt ausgebildet ist, und
**dass** die Anzahl der Führungsstifte an der Oberseite des Formbacken unterschiedlich oder gleich ist zu der Anzahl der Führungsstifte an der Unterseite des Formbacken,
wobei jeder Formbacken genau zwei Führungsstifte oder genau drei Führungsstifte oder mehr als drei Führungsstifte aufweist.

13. Vorrichtung nach Anspruch 11 oder 12,
**dadurch gekennzeichnet,**
**dass** die Breite der Zahnreihe der Zahnreiheneinrichtung sich quer zur Produktionsrichtung mindestens über ein Drittel der Höhe des Formbackens, vorzugsweise über die Hälfte der Höhe des Formbacken, insbesondere über die gesamte Höhe des Formbacken erstreckt, und dass die Anzahl der Führungsstifte an der Oberseite des Formbacken unterschiedlich oder gleich ist zu der Anzahl der Führungsstifte an der Unterseite des Formbacken,
wobei jeder Formbacken genau zwei Führungsstifte oder genau drei Führungsstifte oder mehr als drei Führungsstifte aufweist.

14. Vorrichtung nach einem der Ansprüche 11 bis 13,
**dadurch gekennzeichnet,**
**dass** die Anzahl der Führungsstifte an der Oberseite des Formbacken unterschiedlich ist zu der Anzahl der Führungsstifte an der Unterseite des Formbacken,
wobei jeder Formbacken genau zwei Führungsstifte oder genau drei Führungsstifte oder mehr als drei Führungsstifte aufweist.
